# EUROPÄISCHE PATENTSCHRIFT

(11) **EP 2 837 054 B1**
(45) Veröffentlichungstag und Bekanntmachung des Hinweises auf die Patenterteilung: **25.10.2017**
(21) Anmeldenummer: 13716983.5
(22) Anmeldetag: 28.03.2013
(51) Int. Cl.: H01M 8/06, H01M 8/24, H01M 8/04

(54) **BRENNSTOFFZELLENVORRICHTUNG UND VERFAHREN ZUM BETREIBEN EINER BRENNSTOFFZELLENVORRICHTUNG**
FUEL CELL DEVICE AND OPERATING METHOD
DISPOSITIF ET PROCÉDÉ D'OPÉRATION DE PILE À COMBUSTIBLE

(30) Priorität: 13.04.2012 DE 102012206054
(43) Veröffentlichungstag der Anmeldung: 18.02.2015
(73) Patentinhaber: ElringKlinger AG, 72581 Dettingen (DE)
(72) Erfinder: KIEFER, Thomas, 72574 Bad Urach (DE); ZIMMER, Andreas, 72555 Metzingen (DE); PAUSCH, Moritz, 72639 Neuffen (DE)
(74) Vertreter: Hoeger, Stellrecht & Partner Patentanwälte mbB
(86) Internationale Anmeldenummer: PCT/EP2013/056678
(87) Internationale Veröffentlichungsnummer: WO 2013/152960

(56) Entgegenhaltungen:
- EP-A2- 1 378 954
- EP-A2- 1 791 208
- WO-A1-2010/004092
- DE-A1-102007 015 079
- DE-A1-102009 013 648
- US-A1- 2003 054 215
- US-A1- 2005 014 046
- US-A1- 2005 181 247
- US-A1- 2006 179 718
- US-A1- 2011 045 366

## Beschreibung

Die vorliegende Erfindung betrifft eine Brennstoffzellenvorrichtung, welche einen Brennstoffzellenstapel, der elektrochemisch aktive Kathoden-Elektrolyt-Anoden-Einheiten umfasst, und einen Reformer zum Herstellen eines Brenngases für den Brennstoffzellenstapel aus einem Ausgangsbrennstoff umfasst, wobei dem Brennstoffzellenstapel das vom Reformer hergestellte Brenngas und ein Oxidationsmittel zuführbar sind.

Bekannte Brennstoffzellenvorrichtungen dieser Art umfassen die Baukomponenten Reformer, Brennstoffzellenstapel (auch als "Brennstoffzellenstack" bezeichnet), Restgasbrenner und Schichtwärmeübertrager.

Im Reformer wird ein zuvor verdampfter Kraftstoff, zum Beispiel ein Dieselkraftstoff, beispielsweise durch partielle Oxidation der höheren Kohlenwasserstoffe des Ausgangskraftstoffs in H₂, CO, CO₂, H₂O und Restkohlenwasserstoffe zerlegt. Die Bestandteile H₂ und CO können anschließend im Brennstoffzellenstapel elektrochemisch verstromt werden.

Das bei der elektrochemischen Verstromung im Brennstoffzellenstapel nicht umgesetzte Brenngas wird nach dem Brennstoffzellenstapel sowohl aus sicherheitstechnischen und umwelttechnischen Gründen als auch aus Energieeffizienzgründen im Restgasbrenner nachverbrannt. Die dabei entstehende Prozesswärme wird dem Schichtwärmeübertrager zugeführt. Dieser heizt mit der Prozesswärme das Oxidationsmittel (Kathodenluft) für den Brennstoffzellenstapel auf, bevor das Oxidationsmittel in den Brennstoffzellenstapel geleitet wird.

In der Startphase einer solchen Brennstoffzellenvorrichtung wird der Reformer üblicherweise auch als sogenannter "Startbrenner" verwendet.

Durch die Verbrennung des Ausgangsbrennstoffes entsteht nämlich Wärme, welche dazu dient, den Brennstoffzellenstapel auf dessen Betriebstemperatur (von beispielsweise ungefähr 750 °C) aufzuheizen.

Beim Starten der Brennstoffzellenvorrichtung wird der Reformer als Startbrenner gezündet. Das heiße Brenngas (mit einer Temperatur von teilweise bis zu 900 °C) aus dem Reformer wird auf den noch kalten Brennstoffzellenstapel geleitet. Auch in der Aufheizphase wird das nicht umgesetzte Brenngas - wie in der Betriebsphase - im Restgasbrenner nachverbrannt. Im Schichtwärmetauscher wird das Oxidationsmittel (Kathodenluft) durch Wärmeübertragung aus dem Abgas des Restgasbrenners aufgeheizt.

Dies hat zur Folge, dass die Temperaturdifferenz zwischen den Brenngas-Kanälen und den Oxidationsmittel-Kanälen im Brennstoffzellenstapel teilweise bis zu 200 K betragen kann. Dadurch entstehen thermomechanische Belastungen, die den Brennstoffzellenstapel nachhaltig schädigen können.

Um die Temperaturdifferenz und die daraus resultierenden thermomechanischen Spannungen zu reduzieren, kann die Startbrennerleistung des Reformers reduziert werden. Dies führt aber zu einer für den Benutzer der Brennstoffzellenvorrichtung häufig untolerierbar langen Startzeit der Brennstoffzellenvorrichtung von mehr als 60 Minuten.

Die US 2003/054215 A1 offenbart eine Brennstoffzellenvorrichtung, welche einen Brennstoffzellenstapel, der elektrochemisch aktive Kathoden-Elektrolyt-Anoden-Einheiten umfasst, und einen Reformer zum Herstellen eines Brenngases für den Brennstoffzellenstapel aus einem Ausgangsbrennstoff, wobei dem Brennstoffzellenstapel das von dem Reformer hergestellte Brenngas und ein Oxidationsmittel zuführbar sind, umfasst,
wobei die Brennstoffzellenvorrichtung einen Wärmeübertrager umfasst, der von dem Brenngas und von dem Oxidationsmittel stromaufwärts von den Kathoden-Elektrolyt-Anoden-Einheiten des Brennstoffzellenstapels durchströmbar ist, und wobei der Wärmeübertrager in den Brennstoffzellenstapel integriert ist.

Die US 2004/0265673 A1 offenbart eine Brennstoffzellenvorrichtung, bei der zwischen einer Endplatte einer sogenannten "integrated component manifold" und einer Montageplatte eines Brennstoffzellenstapels eine elastische Dichtung angeordnet ist, welche eine gasgefüllte Kammer enthält und mit der Montageplatte des Brennstoffzellenstapels und mit der Endplatte der "integrated component manifold" eine Diffusionsverbindung eingeht.

Die EP 1 378 954 A2 offenbart eine Brennstoffzellenvorrichtung gemäß dem Oberbegriff von Anspruch 1.

Der vorliegenden Erfindung liegt die Aufgabe zugrunde, eine Brennstoffzellenvorrichtung der eingangs genannten Art zu schaffen, bei welcher die thermomechanischen Belastungen in der Aufheizphase verringert werden und/oder eine Verkürzung der Aufheizphase ermöglicht ist.

Diese Aufgabe wird durch eine Brennstoffzellenvorrichtung nach Anspruch 1 gelöst.

Der vorliegenden Erfindung liegt somit das Konzept zugrunde, einen Wärmeübertrager vorzusehen, der im Strömungsweg des Brenngases zwischen dem Reformer und dem elektrochemisch aktiven Teil des Brennstoffzellenstapels angeordnet ist.

In der Startphase oder Aufheizphase wird das heiße Brenngas vom Reformer in diesen Wärmeübertrager geleitet. Hier kann das Brenngas einen Teil seiner Wärme an das ebenfalls in den Wärmeübertrager eingespeiste Oxidationsmittel (Kathodenluft) abgeben. Das Brenngas wird dabei abgekühlt, während das Oxidationsmittel (Kathodenluft) aufgeheizt wird. Der Wärmeübertrager weist somit eine im Wesentlichen neutrale Energiebilanz auf, wobei nahezu kein Wärmeverlust im Wärmeübertrager auftritt.

Die jeweiligen Temperaturen des Brenngases und des Oxidationsmittels gleichen sich im Wärmeübertrager im Wesentlichen ohne zeitlichen Versatz an, bevor das Brenngas und das Oxidationsmittel in den elektrochemisch aktiven Teil des Brennstoffzellenstapels gelangen.

Hierdurch verringert sich die thermomechanische Belastung im Brennstoffzellenstapel bei vorgegebener Startzeit, oder der Brennstoffzellenstapel kann - ohne Erhöhung der thermomechanischen Spannungen im Brennstoffzellenstapel - mit einem höheren zeitlichen Temperaturgradienten belastet werden, was bedeutet, dass die Startzeit verkürzt werden kann.

Der Wärmeübertrager ist in den Brennstoffzellenstapel integriert.

Eine Integration des Wärmeübertragers in den Brennstoffzellenstapel bietet die Zusatzfunktion, dass das Temperaturfeld des Brennstoffzellenstapels durch den Wärmeübertrager homogenisierbar ist.

Die Leistungsfähigkeit eines Brennstoffzellenstapels, insbesondere eines SOFC("Solid Oxide Fuel Cell")-Brennstoffzellenstapels, wird maßgeblich durch die Homogenität des Temperaturfeldes in allen drei Raumrichtungen bestimmt.

Je nach Strömungskonzept stellen sich im Brennstoffzellenstapel unterschiedliche Temperaturen ein.

Ist der Brennstoffzellenstapel für einen sogenannten "Co-Flow"-Betrieb vorgesehen, bei welchem der Brenngas-Einlass und der Oxidationsmittel-Einlass des Brennstoffzellenstapels gemeinsam auf einer Einlassseite des Brennstoffzellenstapels liegen, während sich der Brenngas-Auslass und der Oxidationsmittel-Auslass des Brennstoffzellenstapels auf der gegenüberliegenden Auslassseite des Brennstoffzellenstapels befinden, so ist die Einlassseite des Brennstoffzellenstapels üblicherweise kühler als dessen Auslassseite. Dies liegt daran, dass bei der Verstromung von H₂ und CO stets auch Wärme produziert wird, welche auf das den Brennstoffzellenstapel durchströmende Brenngas und das den Brennstoffzellenstapel durchströmende Oxidationsmittel übertragen wird.

Ein anderer Temperaturunterschied stellt sich bei den randständigen Brennstoffzelleneinheiten (Randebenen) des Brennstoffzellenstapels ein. Jede Brennstoffzelleneinheit (Ebene des Brennstoffzellenstapels) außer den randständigen Brennstoffzelleneinheiten (Randebenen) erhält Abwärme sowohl von der in der Stapelrichtung des Brennstoffzellenstapels darunterliegenden Brennstoffzelleneinheit (Ebene) als auch von der in der Stapelrichtung des Brennstoffzellenstapels darüberliegenden Brennstoffzelleneinheit (Ebene). Die randständigen Brennstoffzelleneinheiten (Randebenen), das heißt die unterste und die oberste Brennstoffzelleneinheit des Brennstoffzellenstapels, erhalten hingegen Abwärme nur von einer anderen Brennstoffzelleneinheit des Brennstoffzellenstapels, weshalb diese randständigen Brennstoffzelleneinheiten (Randebenen) im Betrieb der Brennstoffzellenvorrichtung kühler sind als die nicht randständigen Brennstoffzelleneinheiten. Da die jeweilige Zellleistung stark von der Temperatur abhängig ist, limitieren die randständigen Brennstoffzelleneinheiten (Randebenen) die gesamte Leistung des Brennstoffzellenstapels.

Ein Wärmeübertrager hat stets eine Wechselwirkung mit seiner Umgebung, das heißt er kann Wärme aus der Umgebung aufnehmen bzw. an die Umgebung abgeben. Es kann daher ein Zusatznutzen des erfindungsgemäßen Wärmeübertragers kreiert werden, indem der Wärmeübertrager so verwendet wird, dass dem Brennstoffzellenstapel durch das Vorhandensein des Wärmeübertragers ein homogeneres Temperaturfeld auferlegt wird.

Es ist daher günstig, dass der Wärmeübertrager zumindest teilweise in einer Randzone des Brennstoffzellenstapels angeordnet ist.

Dabei kann die Randzone, in welcher der Wärmeübertrager zumindest teilweise angeordnet ist, eine obere Randzone, eine untere Randzone oder eine seitliche Randzone des Brennstoffzellenstapels sein.

Ferner ist es günstig, wenn der Wärmeübertrager mindestens eine elektrochemisch inaktive Brennstoffzelleneinheit des Brennstoffzellenstapels umfasst.

Eine solche elektrochemisch inaktive Brennstoffzelleneinheit kann beispielsweise statt der elektrochemisch aktiven Kathoden-Elektrolyt-Anoden-Einheit einer elektrochemisch aktiven Brennstoffzelleneinheit ein elektrochemisch inaktives Trennelement zwischen einem Brenngasraum und einem Oxidationsmittelraum der Brennstoffzelleneinheit umfassen.

Eine oder mehrere solcher elektrochemisch inaktiven Brennstoffzelleneinheiten sind vorzugsweise randständig im Brennstoffzellenstapel angeordnet, das heißt dass diese elektrochemisch inaktiven Brennstoffzelleneinheiten vorzugsweise die untersten oder die obersten Brennstoffzelleneinheiten im Brennstoffzellenstapel bilden.

Insbesondere dann, wenn der Brennstoffzellenstapel für einen "Co-Flow"-Betrieb ausgelegt ist, ist es günstig, wenn der Wärmeübertrager zumindest teilweise seitlich neben mehreren elektrochemisch aktiven Brennstoffzelleneinheiten des Brennstoffzellenstapels angeordnet ist.

Besonders günstig ist es, wenn der Wärmeübertrager seitlich neben allen elektrochemisch aktiven Brennstoffzelleneinheiten des Brennstoffzellenstapels angeordnet ist.

Dabei ist vorzugsweise vorgesehen, dass die Strömungsrichtung des Brenngases und/oder die Strömungsrichtung des Oxidationsmittels durch den Wärmeübertrager zumindest abschnittsweise im Wesentlichen parallel zu einer Stapelrichtung des Brennstoffzellenstapels verläuft.

Die Stapelrichtung ist diejenige Richtung, in welcher die Brennstoffzelleneinheiten des Brennstoffzellenstapels aufeinanderfolgen.

Wenn ein Teil des Wärmeübertragers eine seitliche Randzone des Brennstoffzellenstapels bildet, so verläuft die Strömungsrichtung des Brenngases und/oder die Strömungsrichtung des Oxidationsmittels durch diesen Teil des Wärmeübertragers vorzugsweise überall im Wesentlichen parallel zu der Stapelrichtung des Brennstoffzellenstapels.

Bei einer bevorzugten Ausgestaltung der Erfindung ist vorgesehen, dass der Wärmeübertrager nicht nur der Wärmeübertragung dient, sondern auch mindestens eine chemisch aktive Substanz umfasst.

Eine solche chemisch aktive Substanz dient vorzugsweise dazu, eine Veränderung der Zusammensetzung des Brenngases im Wärmeübertrager zu bewirken.

Vorzugsweise kommt die mindestens eine chemisch aktive Substanz mit dem Brenngas in Kontakt, während dasselbe den Wärmeübertrager durchströmt.

Die mindestens eine chemisch aktive Substanz kann insbesondere eine zumindest teilweise Reduktion mindestens eines Bestandteils des Brenngases und/oder eine Verringerung des Sauerstoffgehaltes im Brenngas und/oder eine zumindest teilweise Entfernung von Schwefel oder einer Schwefelverbindung aus dem Brenngas bewirken.

Durch eine zumindest teilweise Reduktion mindestens eines Bestandteils des Brenngases wird eine unerwünschte Aufkohlung an den Anoden der elektrochemisch aktiven Brennstoffzelleneinheiten des Brennstoffzellenstapels vermieden.

Aufkohlende Gase wie Kohlenmonoxid (CO) oder höhere Kohlenwasserstoffe (beispielsweise Ethin, C₂H₂) werden nämlich an den Anoden der Brennstoffzelleneinheiten, unterstützt von der katalytischen Aktivität der Anoden (beispielsweise des darin enthaltenen Nickels) reduziert, wobei sich Kohlenstoff an den Anoden ablagert.

Diese Aufkohlung tritt besonders bei Temperaturen zwischen ungefähr 300 °C und ungefähr 600 °C (Festkörpertemperatur) auf (sogenanntes "Rußfenster").

Das in den Brennstoffzellenstapel einströmende Gas ist zwar von Anfang an deutlich wärmer als das Rußfenster, jedoch ist die Substrattemperatur, insbesondere die Temperatur der Anoden, zunächst geringer. Die Anoden werden erst durch den Brenngasstrom aufgewärmt.

Je höher die Temperatur der Anoden wird, desto schneller diffundiert der auf den Anoden abgelagerte Kohlenstoff in das Anodenmaterial (meist ein Cermet-Material) und dort bevorzugt in die metallische Komponente (beispielsweise Nickel) hinein. Da es sich hierbei um einen Diffusionsprozess handelt, tritt dieser umso stärker auf, je höher die Temperatur ist und je länger die erhöhte Temperatur gehalten wird (beispielsweise bei einer Temperatur oberhalb von 500 °C und einer Haltezeit von mehr als einer Stunde).

Ein Betriebszyklus der Brennstoffzellenvorrichtung besteht aus einer Aufheizphase, einer Betriebsphase und einer Abkühlphase. Diesem Betriebszyklus entspricht ein Temperaturzyklus des Brennstoffzellenstapels.

In der Aufheizphase kommt es zur Kohlenstoffablagerung an den Anoden. In der Betriebsphase diffundiert der Kohlenstoff in die Metallkörner (beispielsweise Nickel) ein. In der Abkühlphase oder in der darauffolgenden nächsten Aufheizphase sprengt der eindiffundierte Kohlenstoff die Metallkörner aufgrund der nicht miteinander kompatiblen thermischen Ausdehnungskoeffizienten des metallischen Korns einerseits und des Kohlenstoffs andererseits.

Dieses Aufsprengen wird auch "metal dusting" genannt. Die herausgelösten Metallpartikel werden durch den Brenngasstrom aus dem Brennstoffzellenstapel heraustransportiert. Die Anoden verlieren somit zunehmend ihre metallische und katalytisch aktive Komponente. Dadurch verlieren die Brennstoffzelleneinheiten ihre Leistungsfähigkeit.

Die beschriebenen Prozesse der Kohlenstoffablagerung, der Kohlenstoffdiffusion und des "metal dusting" treten nicht nur sequentiell auf, sondern können sich auch überlagern.

Aufgrund der Kohlenstoffablagerung an den Anoden der Brennstoffzelleneinheiten in Verbindung mit "metal dusting"-Effekten kommt es zu einer hohen Alterungsrate des Brennstoffzellenstapels. Um die hieraus resultierenden Leistungsverluste zu kompensieren, muss der Brennstoffzellenstapel entsprechend überdimensioniert werden. Dies verursacht Mehrkosten oder führt zu einem für den Benutzer inakzeptablen Leistung/Kosten-Verhältnis.

Um Schädigungen des Brennstoffzellenstapels durch eine solche Aufkohlung durch CO oder höhere Kohlenwasserstoffe (beispielsweise C₂H₂) im Brennstoffzellenstapel zu vermeiden, ist es von Vorteil, diese aufkohlenden Gase vor dem Eintritt in den Brennstoffzellenstapel zu reduzieren.

Dies kann erreicht werden, wenn der erfindungsgemäße Wärmeübertrager brenngasseitig katalytisch aktive Flächen enthält.

Diese katalytisch aktiven Flächen können beispielsweise durch Einlegen eines Anodensubstrats (Cermet-Material) oder einer, insbesondere handelsüblichen, Nickelfolie in einen Brenngasraum des Wärmeübertragers bereitgestellt werden.

Insbesondere das Nickel hat eine ausreichend hohe katalytische Aktivität, um eine Reduktion der aufkohlenden Gase zu erzielen.

Die Reduktionswirkung ist besonders groß, wenn die Temperatur der zur Reduktion der aufkohlenden Gase chemisch aktiven Substanz im Wärmeübertrager längere Zeit im vorstehend erwähnten Rußfenster (von ungefähr 300 °C bis ungefähr 600 °C) gehalten wird und/oder wenn die Reduktionsreaktion katalytisch beschleunigt wird.

Besonders günstig ist es, wenn die chemisch aktive Substanz, insbesondere eine eingelegte Folie, durch das ebenfalls den Wärmeübertrager durchströmende Oxidationsmittel gekühlt wird, weil dadurch die Verweilzeit im Rußfenster steigt.

Durch eine chemisch aktive Substanz im Wärmeübertrager, welche eine Verringerung des Sauerstoffgehaltes im Brenngas bewirkt, kann eine unerwünschte Reoxidation der Anoden der Brennstoffzelleneinheiten des Brennstoffzellenstapels vermieden werden.

Bedingt durch unterschiedliche Betriebsstrategien ist es nämlich nahezu unvermeidlich, dass Sauerstoff mit dem Brenngas auf die Anoden gelangt. So kann der Reformer insbesondere beim Zünden im Fall eines Neustarts der Brennstoffzellenvorrichtung kurzfristig Sauerstoff auf die noch heißen Anoden (bei einer Temperatur von beispielsweise mehr als 300 °C) emittieren, da eine Überstöchiometrie des Sauerstoffs bezogen auf den eingesetzten Ausgangsbrennstoff für die Zündneigung notwendig ist.

Leistungsfähige Anoden bestehen meist aus einem Cermet-Material (beispielsweise Nickel und Yttrium-stabilisiertes Zirkondioxid). Durch den systembedingten Sauerstoffeintrag kann es an den Anoden bei erhöhten Temperaturen zu einer Oxidation des metallischen Nickels kommen (Bildung von NiO). Da es sich bei diesem Vorgang um einen Diffusionsprozess handelt, ist das Ausmaß desselben temperaturabhängig. Eine merkliche Diffusion und Reoxidation wird erst merklich bei Temperaturen von mehr als 300 °C. Durch die Oxidation kommt es zu einer Volumenänderung der Struktur. Wenn wieder Brenngas auf die Anode gelangt (das heißt wenn der Sauerstoffpartialdruck wieder abnimmt), wird das NiO wieder zu Ni reduziert. Jedoch ist auch dieser Vorgang mit einer erneuten Volumenänderung verbunden. Sowohl die Oxidation als auch die anschließende Reduktion induzieren mechanische Spannungen in den Anoden. Da es sich bei den elektrochemisch aktiven Zellen um einen überwiegend keramischen Verbund handelt, können die entstehenden mechanischen Spannungen nicht durch plastisches Verformen kompensiert werden. Vielmehr bauen sich die mechanischen Spannungen in Form von Rissen im an die Anoden angrenzenden Elektrolyten ab. Durch diese Risse kann Brenngas direkt mit dem Oxidationsmittel (beispielsweise Luft) auf der gegenüberliegenden Seite der elektrochemisch aktiven Zelle reagieren.

Im günstigeren Fall resultiert hieraus lediglich ein Leistungs- oder Wirkungsgradverlust des Brennstoffzellenstapels. Im schlimmsten Fall können die Risse aber, bedingt durch einen offenen Brand, ein katastrophales Versagen des Brennstoffzellenstapels bewirken.

Das Problem der unerwünschten Reoxidation des Anodenmaterials tritt insbesondere bei einem Reformerstart in Verbindung mit einem noch warmen Brennstoffzellenstapel auf.

Der Reformer kann, beispielsweise durch elektrische Heizung, vorkonditioniert werden, um das Sauerstoffvolumen im Brenngas zu reduzieren, weil dann eine geringere Überstöchiometrie notwendig ist. Problematisch ist allerdings hierbei die Bereitstellung der elektrischen Energie, welche dazu benötigt wird, um den Reformer schon ohne Gasverbrennung aufzuheizen (Vorkonditionierung).

Alternativ zu einer Vorheizung des Reformers kann auch die Regelstrategie der Brennstoffzellenvorrichtung geändert werden, so dass beispielsweise die Brennstoffzellenvorrichtung nicht eingeschaltet werden kann, solange der Brennstoffzellenstack noch warm ist. Solche Einschränkungen in der Betriebsweise der Brennstoffzellenvorrichtung sind für den Benutzer aber häufig nicht akzeptabel.

Es ist daher günstig, wenn der Wärmeübertrager, vorzugsweise brenngasseitig, mindestens eine chemische Substanz enthält, welche im Fall eines Reformerstarts bei einem noch warmen Brennstoffzellenstapel den Sauerstoff aus dem vom Reformer emittierten Brenngas zumindest teilweise entfernt ("gettert").

Eine für eine Verringerung des Sauerstoffgehaltes im Brenngas verwendbare chemisch aktive Substanz ist beispielsweise ein Cermet-Material, Nickel oder eine Nickellegierung.

Die vorstehend beschriebene Rissbildung kann im Falle der chemisch aktiven Substanz im Wärmeübertrager nicht auftreten, da diese Substanz nicht an einen Elektrolyten angrenzt. Ferner muss die eingesetzte chemische Substanz oder ein Substanzträger, an dem diese chemische Substanz angeordnet ist, nicht gasdicht sein, so dass eine Rissbildung unschädlich wäre.

Durch die Wechselwirkung von Aufkohlung und Reoxidation an der chemisch aktiven Substanz im Wärmeübertrager kann die Lebensdauer dieser chemisch aktiven Substanz positiv beeinflusst werden.

So kann beispielsweise der in der Aufheizphase an der chemisch aktiven Substanz im Wärmeübertrager abgelagerte Kohlenstoff durch einen Reformerstart, bei dem Sauerstoff mit dem Brenngas in den Wärmeübertrager gelangt, freigebrannt werden, bevor der abgelagerte Kohlenstoff einen "metal dusting"-Effekt auslöst.

Wenn im Wärmeübertrager, vorzugsweise brenngasseitig, mindestens eine chemisch aktive Substanz vorhanden ist, welche eine zumindest teilweise Entfernung von Schwefel oder einer Schwefelverbindung aus dem Brenngas bewirkt, so bietet dies den Vorteil, dass eine durch Verunreinigung des Brenngases mit Schwefel bedingte Leistungsabnahme des Brennstoffzellenstapels vermieden wird.

Im handelsüblichen Ausgangsbrennstoff, beispielsweise in einem Dieselkraftstoff, sind trotz der Bezeichnung "schwefelfrei" nämlich geringe Mengen an Schwefel vorhanden (in Europa beispielsweise bis zu 10 ppm; in den USA ist der Schwefelgehalt noch höher).

Während bei Betriebstemperaturen des Brennstoffzellenstapels höher als 900 °C diese Schwefelmengen tolerabel sind, ist dies bei einer Absenkung der Betriebstemperatur des Brennstoffzellenstapels kritischer.

Bei hocheffizienten SOFC("Solid Oxide Fuel Cell")-APU("Auxiliary Power Unit")-Brennstoffzellenvorrichtungen werden aufgrund von Wirkungsgradbetrachtungen Betriebstemperaturen des Brennstoffzellenstapels von weniger als 800 °C bevorzugt. In diesem Fall sinkt die Schwefeltoleranz auf deutlich weniger als 10 ppm. Bisherige Untersuchungen ergaben, dass bei einer Betriebstemperatur des Brennstoffzellenstapels von ungefähr 800 °C erst bei einem Schwefelgehalt von weniger als 1 ppm keine Leistungsabnahme mehr resultiert.

Bei Verwendung eines normalen Dieselkraftstoffs mit einem Schwefelgehalt von 8,8 ppm und einer Betriebstemperatur des Brennstoffzellenstapels von 750 °C nimmt die Leistung des Brennstoffzellenstapels innerhalb von 4 Stunden um mehr als 30 % ab. Gasanalysen haben ergeben, dass diese geringere Leistung darauf zurückzuführen ist, dass im Brennstoffzellenstack kein CO mehr umgesetzt wird, während H₂ zunächst gleichbleibend weiter verstromt wird.

Der Leistungsabfall durch den Schwefelgehalt ist zwar teilweise reversibel, wenn dem Brennstoffzellenstapel ein Brenngas mit einem Schwefelgehalt von weniger als 1 ppm zugeführt wird. Bei Verwendung von derzeit handelsüblichem Kraftstoff ist der aus dem Schwefelgehalt resultierende Leistungs- bzw. Wirkungsgradverlust jedoch nicht tolerabel.

Durch Verwendung einer chemisch aktiven Substanz im Wärmeübertrager, welche eine zumindest teilweise Entfernung von Schwefel oder einer Schwefelverbindung aus dem Brenngas bewirkt, kann dieser Leistungsverlust durch zu hohen Schwefelgehalt vermieden werden.

Insbesondere kann eine chemisch aktive Substanz, welche Nickel enthält, Schwefel aus der Gasphase entfernen.

Zur Verringerung des Schwefelgehalts im Brenngas kann also insbesondere eine Folie aus Nickel oder einer Nickellegierung in den Wärmeübertrager eingebracht werden.

Die chemisch aktive Substanz kann insbesondere eine Beschichtung an einer Wandung eines von dem Brenngas durchströmbaren Innenraums des Wärmeübertragers und/oder einen in einem von dem Brenngas durchströmbaren Innenraum des Wärmeübertragers angeordneten Substanzträger umfassen.

Der Substanzträger kann insbesondere als eine Folie ausgebildet sein, die mit der chemisch aktiven Substanz beschichtet oder aus der chemisch aktiven Substanz gebildet ist.

Ferner ist es von Vorteil, wenn die chemisch aktive Substanz durch den Wärmeübertrager durchströmendes Oxidationsmittel kühlbar ist. Hierdurch kann insbesondere erreicht werden, dass die Temperatur der chemisch aktiven Substanz im Wärmeübertrager möglichst lange im sogenannten Rußfenster (von ungefähr 300 °C bis ungefähr 600 °C Festkörpertemperatur) verweilt, wodurch eine besonders effiziente Reduktion aufkohlender Gase aus dem Brenngas bewirkt wird.

Die chemisch aktiven Substanzen, die vorteilhafterweise im Wärmeübertrager angeordnet sind, können insbesondere einen oder mehrere der folgenden Bestandteile enthalten:
- Nickel;
- ein Cermet-Material;
- ein Edelmetall, wie beispielsweise Silber, Gold und/oder Platin;
- ein katalytisch aktives Oxidkeramik-Material, beispielsweise ein Cer-Oxid;
und/oder
- eine sonstige katalytisch aktive Verbindung, beispielsweise eine Verbindung aus ungefähr 20 Gewichtsprozent bis ungefähr 90 Gewichtsprozent von Nebengruppenmetallen oder von Elementen der dritten und vierten Hauptgruppe und ungefähr 10 Gewichtsprozent bis ungefähr 80 Gewichtsprozent Alkali- oder Erdalkaliverbindungen (Verbindungen dieser Art sind beispielsweise in der WO 2008/122266 A1 offenbart, auf welche insoweit ausdrücklich Bezug genommen wird).

Der erfindungsgemäße Wärmeübertrager ist vorzugsweise als ein Schichtwärmeübertrager ausgebildet.

Bei einer besonderen Ausführungsform der Erfindung ist der Wärmeübertrager so ausgeführt, dass er kein separates Bauteil ist, sondern in Form von zusätzlichen Ebenen (elektrochemisch inaktive Brennstoffzelleneinheiten) im Brennstoffzellenstapel integriert ist.

In den Wärmeübertrager können Folien mit einer oder mehreren chemisch aktiven Substanzen, welche die Zusammensetzung des Brenngases, das durch den Wärmeübertrager strömt, verändern, eingelegt sein.

Die Brennstoffzelleneinheiten der erfindungsgemäßen Brennstoffzellenvorrichtung sind vorzugsweise als SOFC("Solid Oxide Fuel Cell")-Brennstoffzellen (Festoxidbrennstoffzellen) ausgebildet und/oder weisen vorzugsweise eine Betriebstemperatur von 650 °C oder mehr auf.

Die vorliegende Erfindung betrifft ferner ein Verfahren zum Betreiben einer Brennstoffzellenvorrichtung, welches folgende Verfahrensschritte umfasst:
- Herstellen eines Brenngases aus einem Ausgangsbrennstoff mittels eines Reformers;
- Zuführen des Brenngases zu einem Brennstoffzellenstapel, der elektrochemisch aktive Kathoden-Elektrolyt-Anoden-Einheiten umfasst; und
- Zuführen eines Oxidationsmittels zu dem Brennstoffzellenstapel.

Der vorliegenden Erfindung liegt die weitere Aufgabe zugrunde, ein solches Verfahren zu schaffen, bei dem thermomechanische Spannungen im Brennstoffzellenstapel verringert werden und/oder eine kürzere Aufheizphase des Brennstoffzellenstapels realisierbar ist.

Diese Aufgabe wird durch ein Verfahren zum Betreiben einer Brennstoffzellenvorrichtung nach Anspruch 11 gelöst.

Besondere Ausgestaltungen eines solchen Verfahrens sind bereits vorstehend im Zusammenhang mit den besonderen Ausgestaltungen der erfindungsgemäßen Brennstoffzellenvorrichtung erläutert worden.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Prinzipdarstellung einer nicht erfindungsgemäßen ersten Ausführungsform einer Brennstoffzellenvorrichtung, welche einen Reformer, einen Brennstoffzellenstapel, einen Restgasbrenner, einen stromaufwärts von dem Brennstoffzellenstack angeordneten Wärmeübertrager und einen stromabwärts von dem Restgasbrenner angeordneten Wärmeübertrager umfasst;
- Fig. 2: einen schematischen vertikalen Schnitt durch den stromaufwärts von dem Brennstoffzellenstapel angeordneten Wärmeübertrager aus Fig. 1;
- Fig. 3: eine schematische Draufsicht auf den Wärmeübertrager aus Fig. 2;
- Fig. 4: einen schematischen vertikalen Schnitt durch den Brennstoffzellen-stapel und den stromaufwärts von dem Brennstoffzellenstapel angeordneten Wärmeübertrager aus Fig. 1;
- Fig. 5: eine schematische Prinzipdarstellung einer erfindungsgemäßen zweiten Ausführungsform einer Brennstoffzellenvorrichtung, welche einen Reformer, einen Brennstoffzellenstapel und einen Restgasbrenner, einen in den Brennstoffzellenstapel integrierten und stromaufwärts von den Kathoden-Elektrolyt-Anoden-Einheiten des Brennstoffzellenstapels angeordneten Wärmeübertrager und einen stromabwärts von dem Restgasbrenner angeordneten Abgas-Wärmeübertrager umfasst;
- Fig. 6: einen schematischen vertikalen Schnitt durch den elektrochemisch aktiven Teil des Brennstoffzellenstapels und den dem Brennstoffzellenstapel vorgeschalteten Wärmeübertrager, wobei der elektrochemisch aktive Teil des Brennstoffzellenstapels auf den Wärmeübertrager aufgeschweißt ist;
- Fig. 7: einen schematischen vertikalen Schnitt durch den elektrochemisch aktiven Teil des Brennstoffzellenstapels und den dem Brennstoffzellenstapel vorgeschalteten Wärmeübertrager bei einer nicht erfindungsgemäßen Ausführungsform einer Brennstoffzellenvorrichtung, wobei der elektrochemisch aktive Teil des Brennstoffzellenstapels mittels einer Dichtungsmatte auf den Wärmeübertrager aufgesetzt ist;
- Fig. 8: einen schematischen vertikalen Schnitt durch einen Brennstoffzellenstapel mit integriertem Wärmeübertrager, wobei ein Teil des Wärmeübertragers seitlich neben mehreren elektrochemisch aktiven Zellen des Brennstoffzellenstapels angeordnet ist;
- Fig. 9: einen schematischen horizontalen Schnitt durch den Brennstoffzellenstapel aus Fig. 8;
- Fig. 10: eine schematische Prinzipdarstellung einer nicht erfindungsgemäßen dritten Ausführungsform einer Brennstoffzellenvorrichtung, welche einen Reformer, einen Brennstoffzellenstapel, einen Restgasbrenner und einen Wärmeübertrager, der von reformiertem Brenngas, von Oxidationsmittel und von einem Abgas des Restgasbrenners durchströmbar ist, umfasst;
- Fig. 11: einen schematischen vertikalen Schnitt durch den Wärmeübertrager aus Fig. 10;
- Fig. 12: einen schematischen horizontalen Schnitt durch den Wärmeübertrager aus Fig. 10; und

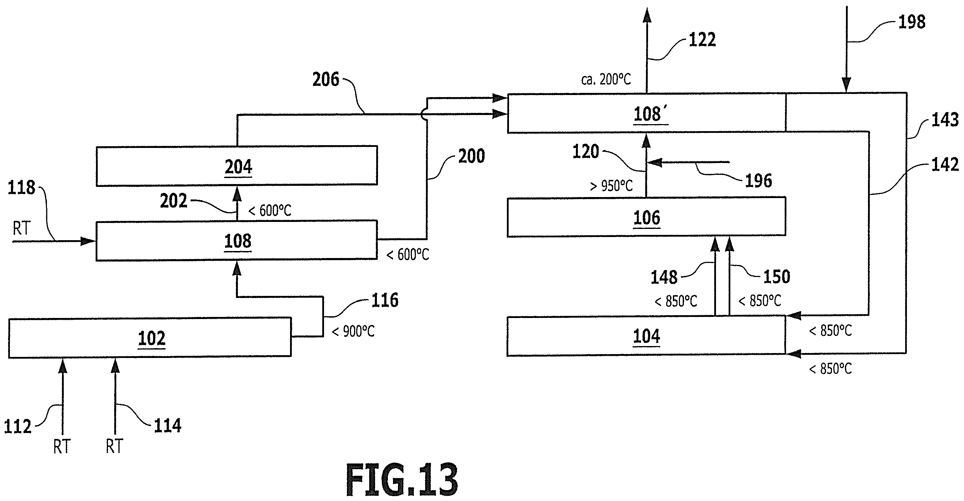

- Fig. 13: eine schematische Prinzipdarstellung einer nicht erfindungsgemäßen vierten Ausführungsform einer Brennstoffzellenvorrichtung, welche einen Reformer, einen Brennstoffzellenstapel, einen Restgasbrenner, einen von reformiertem Brenngas und Oxidationsmittel durchströmbaren ersten Wärmeübertrager, eine von reformiertem Brenngas aus dem ersten Wärmeübertrager durchströmbare Entschwefelungsvorrichtung und eine von reformiertem Brenngas aus der Entschwefelungsvorrichtung, von Oxidationsmittel aus dem ersten Wärmeübertrager und von einem Abgas des Restgasbrenners durchströmbaren zweiten Wärmeübertrager umfasst.

Gleiche oder funktional äquivalente Elemente sind in sämtlichen Figuren mit denselben Bezugszeichen bezeichnet.

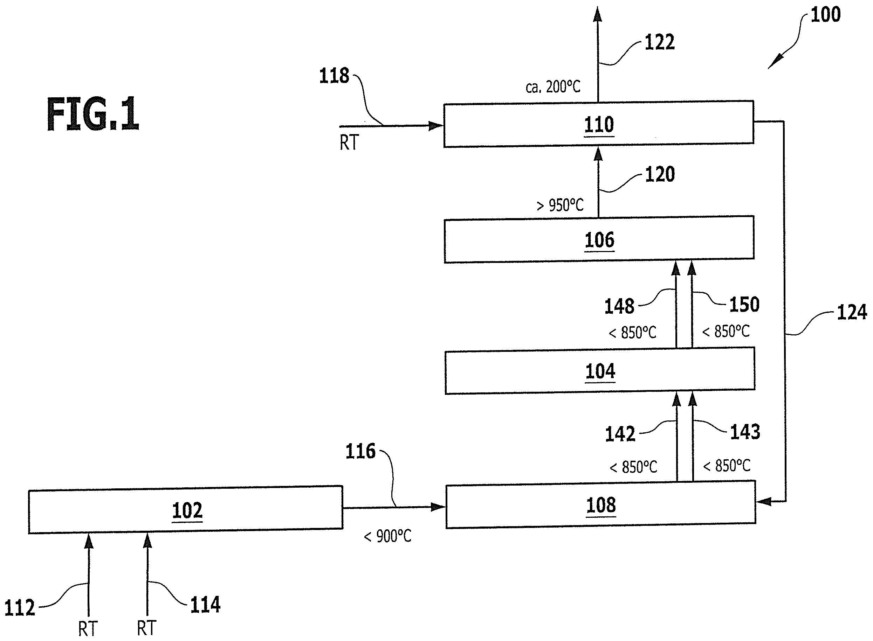

Eine in den Fig. 1 bis 4 dargestellte, als Ganzes mit 100 bezeichnete Brennstoffzellenvorrichtung, deren prinzipieller Aufbau aus Fig. 1 zu ersehen ist, umfasst einen Reformer 102, einen Brennstoffzellenstapel 104, einen Restgasbrenner 106, einen Wärmeübertrager 108 und einen Abgas-Wärmeübertrager 110.

Im Reformer 102 wird ein zuvor verdampfter Ausgangsbrennstoff, beispielsweise Diesel, in ein Brenngas umgewandelt, welches in dem Brennstoffzellenstapel 104 elektrochemisch verstrombare Bestandteile, insbesondere H₂ und CO, enthält.

Die Herstellung des Brenngases aus dem Ausgangsbrennstoff im Reformer 102 kann beispielsweise durch eine partielle Oxidation der höheren Kohlenwasserstoffe des Ausgangsbrennstoffs, beispielsweise des Dieselkraftstoffs, erfolgen, mittels welcher diese höheren Kohlenwasserstoffe in H₂, CO, CO₂, H₂O und Restkohlenwasserstoffe zerlegt werden.

Der verdampfte Ausgangsbrennstoff wird dem Reformer 102 über eine Ausgangsbrennstoff-Zuführleitung 112 zugeführt. Der zugeführte Ausgangsbrennstoff kann sich dabei ungefähr auf Raumtemperatur befinden.

Für die Durchführung der partiellen Oxidation wird dem Reformer 102 ferner Luft über eine Luft-Zuführleitung 114 zugeführt.

Auch diese dem Reformer 102 zugeführte Luft kann beispielsweise Raumtemperatur aufweisen.

Durch die partielle Oxidation des Ausgangsbrennstoffs im Reformer 102 entsteht Wärme, welche das den Reformer 102 verlassende Brenngas, das auch als Reformat bezeichnet wird, auf eine Temperatur von bis zu ungefähr 900 °C erwärmt. Dieses aufgeheizte Brenngas wird über eine Brenngas-Leitung 116 der Warmseite des Wärmeübertragers 108 zugeführt.

Das für die elektrochemische Reaktion im Brennstoffzellenstapel 104 benötigte Oxidationsmittel, beispielsweise Luft, wird über eine Oxidationsmittel-Zuführleitung 118 der Kaltseite des Abgas-Wärmeübertragers 110 zugeführt. Am Oxidationsmittel-Eingang des Abgas-Wärmeübertragers 110 kann das Oxidationsmittel beispielsweise Raumtemperatur aufweisen.

Der Warmseite des Abgas-Wärmeübertragers 110 wird über eine AbgasLeitung 120 ein Abgas des Restgasbrenners 106 zugeführt, welches im Restgasbrenner 106 durch Nachverbrennung des im Brennstoffzellenstapel 104 nicht vollständig umgesetzten Brenngases erzeugt wird.

Die im Restgasbrenner 106 bei der Nachverbrennung des Brenngases entstehende Prozesswärme wird im Abgas-Wärmeübertrager 110 von dem Abgas des Restgasbrenners 106 zumindest teilweise auf das Oxidationsmittel übertragen, wobei das Abgas von einer Eingangstemperatur von beispielsweise mehr als 950 °C auf eine Ausgangstemperatur von beispielsweise ungefähr 200 °C abgekühlt wird.

Das abkühlte Abgas wird aus dem Abgas-Wärmeübertrager 110 über eine Abgas-Abführleitung 122 abgeführt.

Das Oxidationsmittel wird im Abgas-Wärmeübertrager 110 erwärmt, wobei das Ausmaß der Erwärmung vom Betriebszustand des Brennstoffzellenstapels 104 abhängt.

Zu Beginn der Aufheizphase des Brennstoffzellenstapels 104, wenn der Brennstoffzellenstapel 104 noch kalt ist, tritt das Oxidationsmittel ungefähr bei Raumtemperatur aus dem Abgas-Wärmeübertrager 110 aus. Während der Aufheizphase des Brennstoffzellenstapels 104 steigt die Austrittstemperatur des Oxidationsmittels beim Austreten aus dem Abgas-Wärmeübertrager 110 an und erreicht schließlich, wenn sich der Brennstoffzellenstapel 104 in seiner Betriebsphase befindet, beispielsweise ungefähr 700 °C.

Das im Abgas-Wärmeübertrager 110 erwärmte Oxidationsmittel wird über eine Oxidationsmittel-Leitung 124 der Kaltseite des Wärmeübertragers 108 zugeführt.

Im Wärmeübertrager 108 wird Wärme von dem Brenngas auf das Oxidationsmittel übertragen, so dass das Brenngas und das Oxidationsmittel beim Austreten aus dem Wärmeübertrager 108 (durch getrennte Leitungen) im Wesentlichen dieselbe Temperatur von beispielsweise nahezu 850 °C aufweisen.

Im Wärmeübertrager 108 tritt also kein Wärmeverlust auf.

Die Temperaturen des Brenngases und des Oxidationsmittels gleichen sich im Wärmeübertrager 108 ohne zeitlichen Versatz an, bevor sie in den Brennstoffzellenstapel 104 gelangen. Hierdurch wird die thermomechanische Belastung des Brennstoffzellenstapels 104, die sonst durch den Temperaturgradienten zwischen den Brennstoffzellenkanälen und den Oxidationsmittelkanälen im Brennstoffzellenstapel 104 verursacht wird, verringert. Dies bewirkt eine Verlängerung der Lebensdauer des Brennstoffzellenstapels 104. Alternativ oder ergänzend hierzu kann die Aufheizzeit oder Startzeit des Brennstoffzellenstapels 104, welche zur Erhöhung der Temperatur des Brennstoffzellenstapels 104 auf die Betriebstemperatur (von beispielsweise nahezu 850 °C) benötigt wird, verkürzt werden.

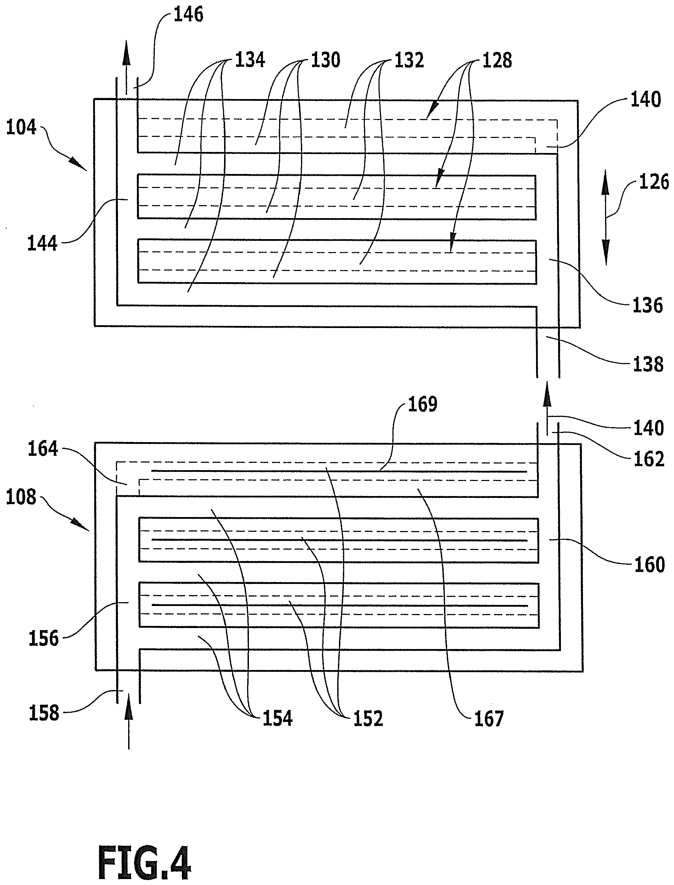

Der Brennstoffzellenstapel 104 weist mehrere, in einer Stapelrichtung 126 aufeinanderfolgende Brennstoffzelleneinheiten 128 auf, welche jeweils eine elektrochemisch aktive Kathoden-Elektrolyt-Anoden-Einheit 130 mit einer Kathode, einer Anode und einem zwischen der Kathode und der Anode angeordneten Elektrolyten sowie einen an die Anode angrenzenden, von dem Brenngas durchströmbaren Anodenraum 132 und einen an die Kathode angrenzenden, von dem Oxidationsmittel durchströmbaren Kathodenraum 134 umfassen (siehe den schematischen vertikalen Schnitt durch den Brennstoffzellenstapel in Fig. 4).

In Fig. 4 ist beispielhaft ein Brennstoffzellenstapel 104 mit drei in der Stapelrichtung 126 aufeinandergestapelten Brennstoffzelleneinheiten 128 dargestellt. In der Praxis wird die Anzahl der Brennstoffzelleneinheiten 128 des Brennstoffzellenstapels 104 jedoch in der Regel deutlich höher sein.

Die Kathodenräume 134 aller Brennstoffzelleneinheiten 128 sind über einen oder mehrere, vorzugsweise im Wesentlichen parallel zur Stapelrichtung 126 verlaufende, Oxidationsmittel-Zuführkanäle 136 mit einem Oxidationsmittel-Einlass 136 des Brennstoffzellenstapels 104 verbunden.

Dem Oxidationsmittel-Einlass 138 des Brennstoffzellenstapels 104 wird das im Wärmeübertrager 108 erwärmte Oxidationsmittel über eine OxidationsmittelLeitung 143 (siehe Fig. 1) zugeführt.

Die Anodenräume 132 aller Brennstoffzelleneinheiten 128 des Brennstoffzellenstapels 104 sind über einen oder mehrere, vorzugsweise im Wesentlichen parallel zur Stapelrichtung 126 verlaufende, Brenngas-Zuführkanäle 140 (siehe Fig. 4) mit einem (nicht dargestellten) Brenngas-Einlass des Brennstoffzellenstapels 104 verbunden.

Dem Brenngas-Einlass des Brennstoffzellenstapels 104 wird das im Wärmeübertrager 108 abgekühlte Brenngas über eine Brenngas-Leitung 142 zugeführt (siehe Fig. 1).

Ferner sind die Kathodenräume 134 aller Brennstoffzelleneinheiten 128 des Brennstoffzellenstapels 104 über einen oder mehrere, vorzugsweise im Wesentlichen parallel zur Stapelrichtung 126 verlaufende, Oxidationsmittel-Abführkanäle 144 mit einem Oxidationsmittel-Auslass 146 des Brennstoffzellenstapels 104 verbunden.

Entsprechend sind alle Anodenräume 132 der Brennstoffzelleneinheiten 128 des Brennstoffzellenstapels 104 über einen oder mehrere, vorzugsweise im Wesentlichen parallel zur Stapelrichtung 126 verlaufende, Brenngas-Abführkanäle mit einem (nicht dargestellten) Brenngas-Auslass des Brennstoffzellenstapels 104 verbunden.

Das im Brennstoffzellenstapel 104 unvollständig umgesetzte Brenngas, das eine Temperatur von beispielsweise nahezu 850 °C aufweist, gelangt von dem Brenngas-Auslass des Brennstoffzellenstapels 104 über eine Brenngas-Leitung 148 zu einem Brenngas-Einlass des Restgasbrenners 106.

Das im Brennstoffzellenstapel 104 unvollständig umgesetzte Oxidationsmittel gelangt von dem Oxidationsmittel-Auslass 146 des Brennstoffzellenstapels 104 über eine Oxidationsmittel-Leitung 150 zu einem Oxidationsmittel-Einlass des Restgasbrenners 106.

Im Restgasbrenner 106 wird das Brenngas mit dem Oxidationsmittel nachverbrannt, und das hierdurch entstehende Abgas des Brennstoffzellenstapels 104 wird über die Abgas-Leitung 120 dem Abgas-Wärmeübertrager 110 zugeführt, wie bereits vorstehend beschrieben. Dieses Abgas kann eine Temperatur von beispielsweise ungefähr 950 °C oder mehr aufweisen.

Bei der in den Fig. 1 bis 4 dargestellten Ausführungsform der Brennstoffzellenvorrichtung 100 ist der Wärmeübertrager 108 separat von dem Brennstoffzellenstapel 104 ausgebildet und angeordnet.

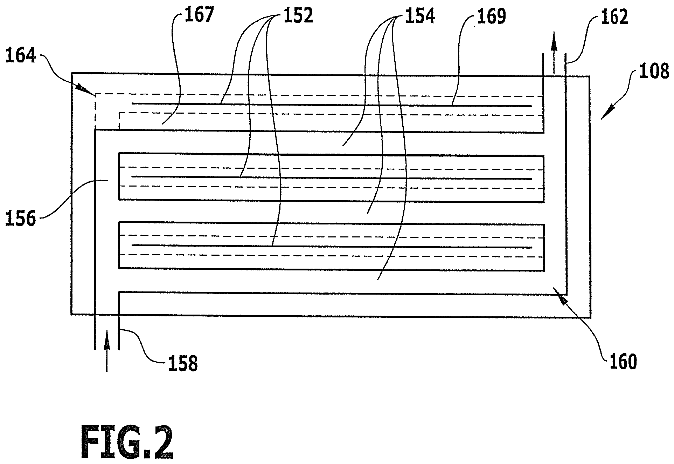

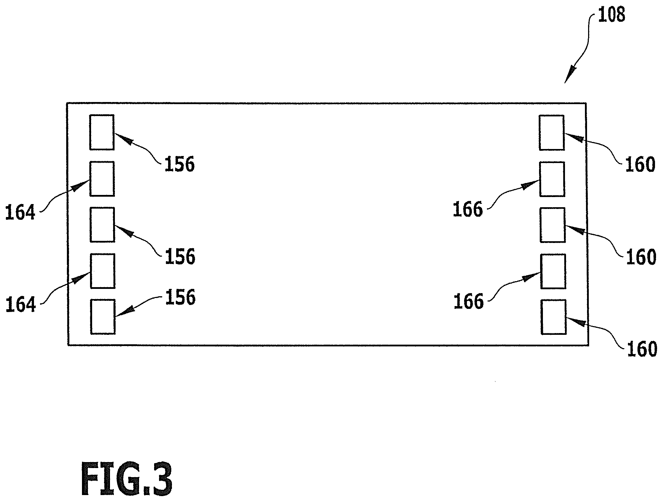

Wie in den Fig. 2 und 3 dargestellt, kann der Wärmeübertrager 108 aber im Wesentlichen denselben grundsätzlichen Aufbau wie der Brennstoffzellenstapel 104 haben, wobei lediglich die elektrochemisch aktiven Kathoden-Elektrolyt-Anoden-Einheiten 130 des Brennstoffzellenstapels 104 durch elektrochemisch inaktive Trennelemente zwischen den Brenngasräumen 152, welche von dem zu kühlenden Brenngas durchströmbar sind, und den Oxidationsmittelräumen 154, welche von dem zu erwärmenden Oxidationsmittel durchströmbar sind, ersetzt werden.

Wie aus den Fig. 2 und 3 zu ersehen ist, sind die Oxidationsmittelräume 154 des Wärmeübertragers 108 über einen oder mehrere, beispielsweise drei, Oxidationsmittel-Zuführkanäle 156 mit einem Oxidationsmittel-Einlass 158 des Wärmeübertragers 108 verbunden.

Ferner sind die Oxidationsmittelräume 154 des Wärmeübertragers 108 über einen oder mehrere, beispielsweise drei, Oxidationsmittel-Abführkanäle 160 mit einem Oxidationsmittel-Auslass 162 des Wärmeübertragers 108 verbunden.

Die Brenngasräume 152 des Wärmeübertragers 108 sind über einen oder mehrere, beispielsweise zwei, Brenngas-Zuführkanäle 164 mit einem (nicht dargestellten) Brenngas-Einlass des Wärmeübertragers 108 verbunden.

Ferner sind die Brenngasräume 152 des Wärmeübertragers 108 über einen oder mehrere, beispielsweise zwei, Brenngas-Abführkanäle 166 mit einem (nicht dargestellten) Brenngas-Auslass des Wärmeübertragers 108 verbunden.

Die Brenngasräume 152 und die Oxidationsmittelräume 154 des Wärmeübertragers 108 werden bei der in den Fig. 2 und 3 dargestellten Ausführungsform des Wärmeübertragers 108 mit parallel zueinander ausgerichteten Strömungsrichtungen des Brenngases bzw. des Oxidationsmittels durchströmt (sogenannter "Co-Flow").

Grundsätzlich kann aber auch vorgesehen sein, dass die Brenngasräume 152 und die Oxidationsmittelräume 154 des Wärmeübertragers 108 im Gegenstrom, das heißt mit entgegengesetzt zueinander gerichteten Strömungsrichtungen des Brenngases bzw. des Oxidationsmittels, durchströmt werden.

Ferner kann auch vorgesehen sein, dass die Strömungsrichtungen des Brenngases in den Brenngasräumen 152 und des Oxidationsmittels in den Oxidationsmittelräumen 154 des Wärmeübertragers 108 quer, vorzugsweise senkrecht, zueinander ausgerichtet sind, so dass der Wärmeübertrager 108 vom Brenngas und dem Oxidationsmittel im Kreuzstrom durchströmt wird.

Ferner ist in den Brenngasräumen 152 des Wärmeübertragers 108 mindestens eine chemisch aktive Substanz angeordnet, mittels welcher die Zusammensetzung des Brenngases beim Durchströmen der Brenngasräume 152 des Wärmeübertragers 108 verändert wird.

So kann vorgesehen sein, dass die chemische Substanz eine zumindest teilweise Reduktion mindestens eines Bestandteils des Brenngases in den Brenngasräumen 152 des Wärmeübertragers 108 bewirkt.

Insbesondere kann vorgesehen sein, dass eine chemische Substanz verwendet wird, mittels welcher CO oder höhere Kohlenwasserstoffe, beispielsweise C₂H₂, reduziert werden, so dass Ruß aus dem Brenngas an der chemischen Substanz auf der Brenngasseite des Wärmeübertragers 108 abgeschieden wird. Hierdurch wird eine Schädigung des Anodenmaterials im Brennstoffzellenstapel 104 durch Aufkohlung vermieden.

Die Reduktion der sonst eine Aufkohlung an den Anoden des Brennstoffzellenstapels 104 verursachenden Bestandteile des Brenngases in den Brenngasräumen 152 des Wärmeübertragers 108 ist besonders wirksam, wenn die Temperatur in den Brenngasräumen 152 des Wärmeübertragers 108 längere Zeit im Rußfenster (von ungefähr 300 °C bis ungefähr 600 °C Festkörpertemperatur) gehalten wird und/oder wenn die Reduktionsreaktion katalytisch beschleunigt wird.

Beispielsweise kann die Reduktion der sonst eine Aufkohlung der Anoden des Brennstoffzellenstapels 104 bewirkenden Bestandteile des Brenngases durch Einlegen eines Anodensubstrats (Cermet-Material) oder einer Nickelfolie in die Brenngasräume 152 des Wärmeübertragers 108 bewirkt werden.

Das Nickel weist eine ausreichend hohe katalytische Aktivität zur Förderung der Reduktionsreaktion auf.

Besonders günstig ist es, wenn die katalytisch wirksame chemische Substanz als Beschichtung auf einem Trennelement 167 zwischen einem Brenngasraum 152 und einem Oxidationsmittelraum 154 des Wärmeübertragers 108 ausgebildet ist und/oder an einem Substratträger 169, insbesondere einer Folie, angeordnet ist, welche mit dem Trennelement 167 zwischen dem Brenngasraum 152 und dem Oxidationsmittelraum 154 in wärmeleitender Verbindung steht oder wenn die katalytisch wirksame chemische Substanz selbst das Trennelement 167 zwischen dem Brenngasraum 152 und dem Oxidationsmittelraum 154 bildet, da in diesen Fällen die chemisch aktive Substanz durch das den Oxidationsmittelraum 154 durchströmende Oxidationsmittel gekühlt wird, was dazu führt, dass die Temperatur der chemisch aktiven Substanz möglichst lange in dem vorstehend genannten Rußfenster verweilt.

Ferner kann vorgesehen sein, dass die chemisch aktive Substanz in den Brenngasräumen 152 des Wärmeübertragers 108 eine Verringerung des Sauerstoffgehalts im Brenngas bewirkt.

Insbesondere kann vorgesehen sein, dass die chemisch aktive Substanz im Falle eines Reformerstarts bei einem noch warmen Brennstoffzellenstapel 104 den vom Reformer 102 emittierten Sauerstoff "gettert", das heißt aus dem Brenngasstrom entfernt.

Wenn das bei einem Reformerstart emittierte Sauerstoffvolumen des Reformers 102 zwischen ungefähr 10 Nl und ungefähr 100 Nl liegt, reichen schon wenige 100 g an in die Brenngasräume 152 des Wärmeübertragers 108 eingebrachter chemisch aktiver Substanz, um diese Sauerstoffmenge aus dem Brenngas zu entfernen.

Durch die Verringerung des Sauerstoffgehaltes im Brenngas kann das Problem einer Reoxidation des Anodenmaterials des Brennstoffzellenstapels 104 im Falle eines Reformerstarts in Verbindung mit einem noch warmen Brennstoffzellenstapel 104 vermieden werden.

Auch für eine Verringerung des Sauerstoffgehaltes im Brenngas ist eine chemisch aktive Substanz, welche ein Cermet-Material oder ein nickelhaltiges Material umfasst, besonders geeignet.

Ferner ist vorzugsweise vorgesehen, dass die chemisch aktive Substanz in den Brenngasräumen 152 des Wärmeübertragers 108 eine zumindest teilweise Entfernung von Schwefel oder Schwefelverbindungen aus dem Brenngas bewirkt.

Insbesondere kann vorgesehen sein, dass die chemisch aktive Substanz gasförmige Schwefelverbindungen kondensiert und an sich bindet.

Über die gesamte Lebensdauer des Brennstoffzellenstapels 104 hinweg müssen üblicherweise weniger als 100 g Schwefel aus dem Brenngas abgeschieden werden. Die Menge an chemisch aktiver Substanz in den Brenngasräumen 152 des Wärmeübertragers 108 wird entsprechend gewählt, um diese Abscheideleistung erzielen zu können.

Auch für die Entschwefelung des Brenngases ist eine chemisch aktive Substanz, welche ein Cermet-Material oder ein nickelhaltiges Material umfasst, besonders geeignet.

Um an der chemisch aktiven Substanz abgeschiedenen Ruß aus dem System zu entfernen, kann vorgesehen sein, dass die chemisch aktive Substanz aus den Brenngasräumen 152 des Wärmeübertragers 108 entnommen und gegen frische chemisch aktive Substanz ausgetauscht wird. Alternativ hierzu kann auch der gesamte Wärmeübertrager 108 einschließlich der in den Brenngasräumen 152 angeordneten chemisch aktiven Substanz ausgetauscht werden.

Die Lebensdauer der chemisch aktiven Substanz im Wärmeübertrager 108 kann aber auch positiv durch Wechselwirkungen beeinflusst werden, welche einen solchen Austausch hinauszögern oder überflüssig machen können.

So kann beispielsweise der während der Aufheizphase des Brennstoffzellenstapels 104 im Wärmeübertrager 108 an der chemisch aktiven Substanz abgelagerte Kohlenstoff durch einen Reformerstart, unter erhöhter Emission von Sauerstoff, freigebrannt werden, bevor die Kohlenstoffablagerung einen "metal dusting"-Effekt auslöst.

Ferner kann vorgesehen sein, dass Kohlenstoffablagerungen an der chemisch aktiven Substanz während der Betriebsphase des Brennstoffzellenstapels 104 durch Rückführung von Abgas des Brennstoffzellenstapels 104 mit erhöhtem H₂O-Gehalt auf die Brenngasseite des Wärmeübertrager 108 (sogenanntes Rezyklieren) verringert werden.

Alternativ oder ergänzend hierzu kann vorgesehen sein, dass Kohlenstoffablagerungen an der chemisch aktiven Substanz des Wärmeübertragers 108 während der Betriebsphase des Brennstoffzellenstapels 104 durch einen erhöhten Sauerstoff-Partialdruck im Brenngas abgebrannt werden.

Zur Erhöhung des Sauerstoff-Partialdrucks im Brenngas kann insbesondere vorgesehen sein, dass der Reformer 102 ein Ventil zur Zugabe von Sauerstoff in das aus dem Reformer 102 austretende Brenngas aufweist.

Alternativ oder ergänzend zu einem Cermet-Material und/oder einem nickelhaltigen Material kann die chemisch aktive Substanz des Wärmeübertragers 108 auch einen oder mehrere der folgenden Bestandteile enthalten:
- ein Edelmetall, wie beispielsweise Silber, Gold und/oder Platin;
- ein katalytisch aktives Oxidkeramik-Material, beispielsweise ein Cer-Oxid; und/oder
- eine sonstige katalytisch aktive Verbindung, beispielsweise eine Verbindung aus ungefähr 20 Gewichtsprozent bis ungefähr 90 Gewichtsprozent von Nebengruppenmetallen oder von Elementen der dritten und vierten Hauptgruppe und ungefähr 10 Gewichtsprozent bis ungefähr 80 Gewichtsprozent Alkali- oder Erdalkaliverbindungen (Verbindungen dieser Art sind beispielsweise in der WO 2008/122266 A1 offenbart, auf welche insoweit ausdrücklich Bezug genommen wird).

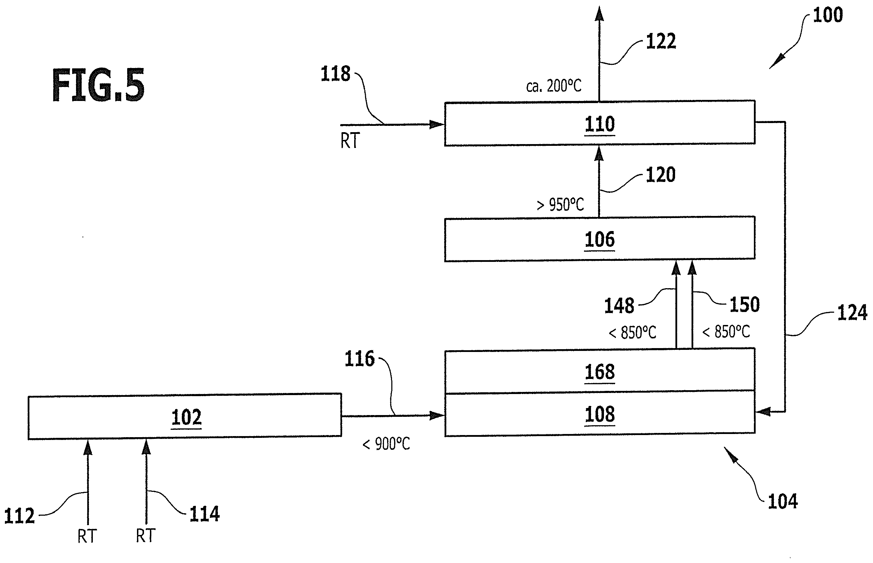

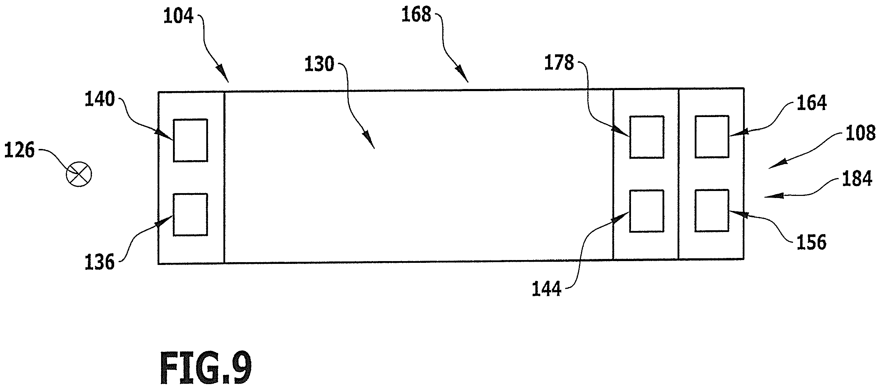

Eine in den Fig. 5 bis 9 dargestellte zweite Ausführungsform der Brennstoffzellenvorrichtung 100 unterscheidet sich von der in den Fig. 1 bis 4 dargestellten ersten Ausführungsform dadurch, dass der Wärmeübertrager 108 nicht als ein separat von dem Brennstoffzellenstapel 104 angeordnetes Element ausgebildet ist, sondern in den Brennstoffzellenstapel 104 integriert ist.

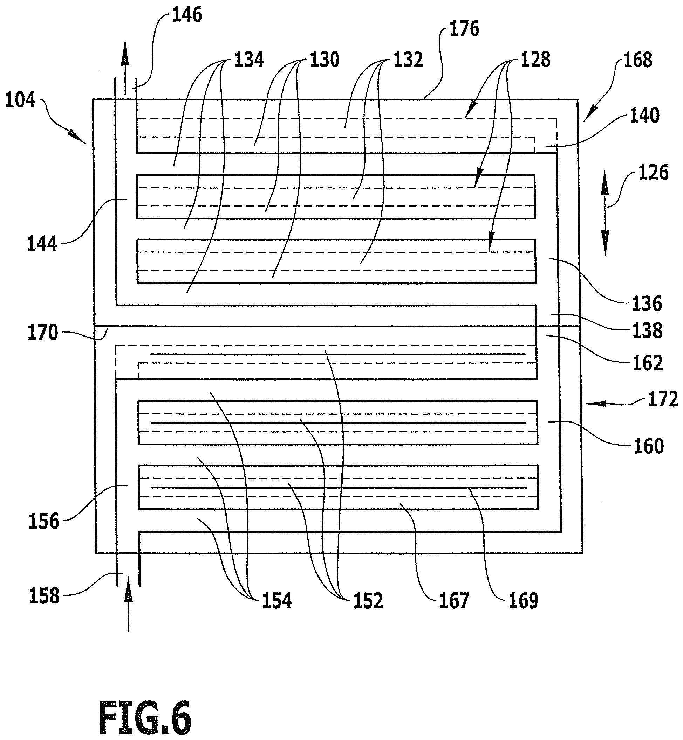

Bei der in Fig. 6 dargestellten Variante dieser Ausführungsform der Brennstoffzellenvorrichtung 100 ist der Wärmeübertrager 108 an die Unterseite 170 des elektrochemisch aktiven Teils 168 des Brennstoffzellenstapels 104 angesetzt, so dass der Wärmeübertrager 108 eine untere Randzone 172 des Brennstoffzellenstapels 104, in welchen der Wärmeübertrager 108 integriert ist, bildet.

Durch diese Ausbildung der Kombination aus Wärmeübertrager 108 und Brennstoffzellenstapel 104 wird das Temperaturfeld im elektrochemisch aktiven Teil 168 des Brennstoffzellenstapels 104 homogenisiert, da eine sich sonst einstellende Erniedrigung der Temperatur in der untersten Ebene des elektrochemisch aktiven Teils 168 des Brennstoffzellenstapels 104 durch die von dem Wärmeübertrager 108 an den elektrochemisch aktiven Teil 168 des Brennstoffzellenstapels 104 abgegebene Wärme verringert oder ganz vermieden wird.

Dabei kann der Wärmeübertrager 108 wie bei der in den Fig. 1 bis 4 dargestellten ersten Ausführungsform ausgebildet sein.

Der elektrochemisch aktive Teil 168 des Brennstoffzellenstapels 104 kann bei dieser Ausführungsform wie der Brennstoffzellenstapel 104 der in den Fig. 1 bis 4 dargestellten ersten Ausführungsform ausgebildet sein.

Bei der in Fig. 6 dargestellten Variante ist der Wärmeübertrager 108 stoffschlüssig, nämlich durch Verschweißung, mit dem elektrochemisch aktiven Teil 168 des Brennstoffzellenstapels 104 verbunden.

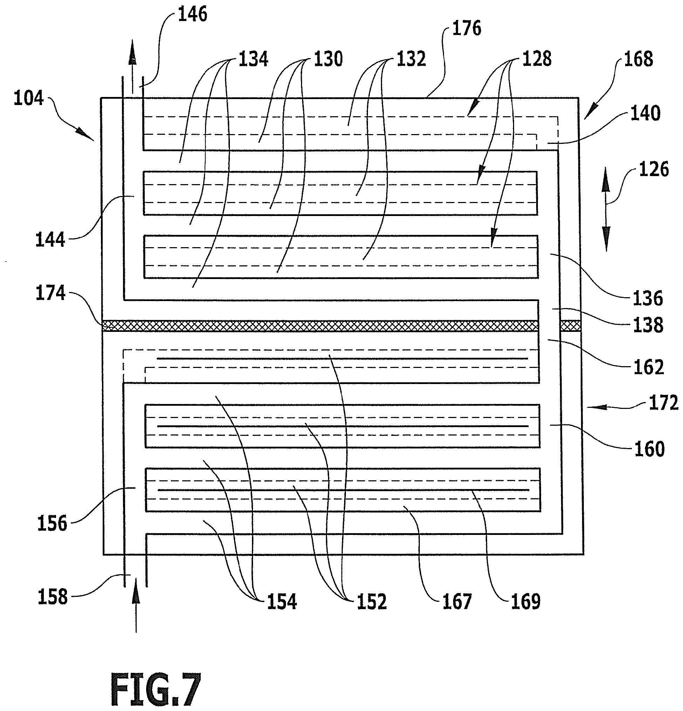

Bei der in Fig. 7 dargestellten, nicht erfindungsgemäßen Variante dieser Ausführungsform liegen der Wärmeübertrager 108 und der elektrochemisch aktive Teil 168 des Brennstoffzellenstapels 104 nicht unmittelbar aneinander an, sondern ist eine Dichtung 174, beispielsweise in Form einer Dichtungsmatte, zwischen dem Wärmeübertrager 108 und dem elektrochemisch aktiven Teil 168 des Brennstoffzellenstapels 104 angeordnet.

Bei dieser Variante sind der Wärmeübertrager 108 und der elektrochemisch aktive Teil 168 des Brennstoffzellenstapels 104 vorzugsweise lösbar, beispielsweise durch Verschraubung, miteinander verbunden.

Dies bietet den Vorteil, dass der elektrochemisch aktive Teil 168 des Brennstoffzellenstapels 104 getrennt von dem Wärmeübertrager 108 einem Systemtest zur Prüfung der Funktionsfähigkeit unterzogen werden kann.

Außerdem werden die durch ein direktes Aufschweißen des elektrochemisch aktiven Teils 168 des Brennstoffzellenstapels 104 auf den Wärmeübertrager 108 auftretenden hohen Belastungen, die aufgrund von Rissbildungen einen Totalausfall des Systems verursachen könnten, vermieden.

Die Dichtung 174 kann beispielsweise eine Mischung von Al₂O₃-Fasern und SiO₂-Fasern (in beliebigem Mischungsverhältnis) umfassen.

Vorzugsweise ist die Dichtung als ein Vlies aus Oxid-Fasern ausgebildet.

Bei der in den Fig. 6 und 7 dargestellten Variante der zweiten Ausführungsform der Brennstoffzellenvorrichtung 100 kann der Wärmeübertrager 108 statt an der Unterseite 170 des elektrochemisch aktiven Teils 168 des Brennstoffzellenstapels 104 auch an der Oberseite 176 des elektrochemisch aktiven Teils 168 angeordnet sein und hierdurch eine obere Randzone des Brennstoffzellenstapels 104 bilden.

Ferner kann vorgesehen sein, dass der Wärmeübertrager 108 in zwei Teile aufgeteilt ist, von denen einer eine untere Randzone 172 und der andere eine obere Randzone des Wärmeübertragers 108 bildet. Hierdurch wird eine besonders wirksame Homogenisierung des Temperaturfeldes im Brennstoffzellenstapel 104 erzielt.

Die Integration des Wärmeübertragers 108 in den Brennstoffzellenstapel 104 kann alternativ oder ergänzend zum Anfügen eines separat hergestellten Wärmeübertragers 108 an den elektrochemisch aktiven Teil 168 des Brennstoffzellenstapels 104 auch dadurch erfolgen, dass eine oder mehrere Brennstoffzelleneinheiten 128 des Brennstoffzellenstapels 104 statt einer elektrochemisch aktiven Kathoden-Elektrolyt-Anoden-Einheit 130 eine elektrochemisch inaktive Trennwand, beispielsweise in Form eines Metallblechs, erhält, wobei dann Wärme durch diese Trennwand hindurch von dem Brenngas auf das Oxidationsmittel übertragen wird.

Die auf diese Weise elektrochemisch inaktiv gemachten Brennstoffzelleneinheiten 128 liegen vorzugsweise stromaufwärts von den elektrochemisch aktiven Brennstoffzelleneinheiten 128.

Die elektrochemisch inaktiven Brennstoffzelleneinheiten 128 können auch als "Dummy-Ebenen" des Brennstoffzellenstapels 104 bezeichnet werden.

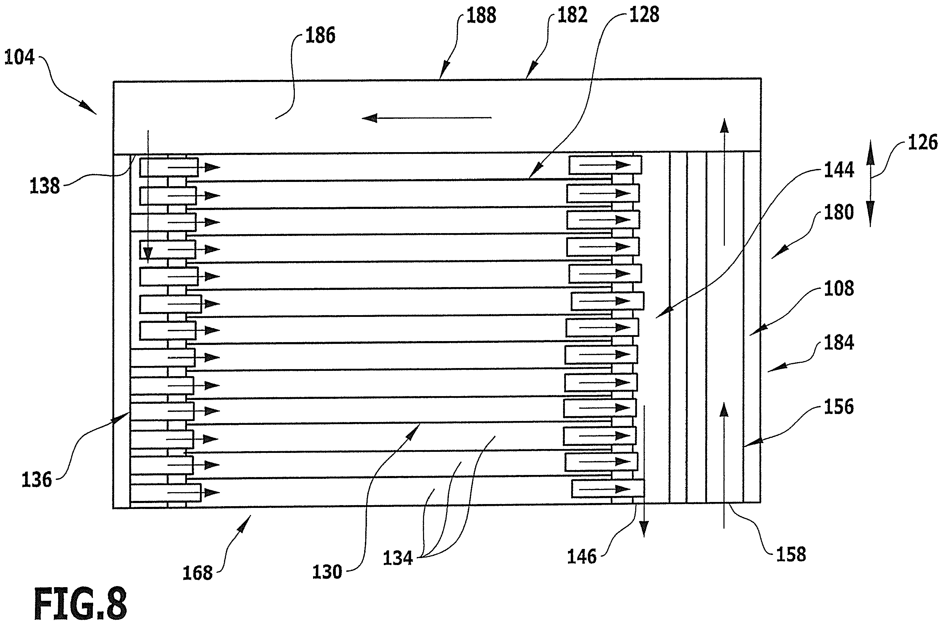

Bei einer in Fig. 8 dargestellten dritten Variante der zweiten Ausführungsform der Brennstoffzellenvorrichtung 100 ist der in den Brennstoffzellenstapel 104 integrierte Wärmeübertrager 108 teilweise seitlich neben dem elektrochemisch aktiven Teil 168 des Brennstoffzellenstapels 104 und teilweise über dem elektrochemisch aktiven Teil 168 des Brennstoffzellenstapels 104 angeordnet, so dass der Wärmeübertrager 108 sowohl eine seitliche Randzone 180 als auch eine obere Randzone 182 des Brennstoffzellenstapels 104 bildet, wodurch eine besonders wirksame Homogenisierung des Temperaturfeldes des Brennstoffzellenstapels 104 erzielt wird.

Der seitlich neben dem elektrochemisch aktiven Teil 168 des Brennstoffzellenstapels 104 angeordnete seitliche Teil 184 des Wärmeübertragers 108 umfasst mindestens einen Oxidationsmittel-Zuführkanal 156 und mindestens einen Brenngas-Zuführkanal 164, welche sich vorzugsweise beide im Wesentlichen längs der Stapelrichtung 126 des Brennstoffzellenstapels 104 erstrecken.

Im seitlichen Teil 184 des Wärmeübertragers 108 kann somit Wärme von dem Brenngas im Brenngas-Zuführkanal 164 auf das Oxidationsmittel im Oxidationsmittel-Zuführkanal 156 übertragen werden.

An seinem dem Oxidationsmittel-Einlass 158 des Wärmeübertragers 108 abgewandten Ende mündet der Oxidationsmittel-Zuführkanal 156 in einen Oxidationsmittelkanal 186, welcher vorzugsweise quer, insbesondere im

Wesentlichen senkrecht, zur Stapelrichtung 126 des Brennstoffzellenstapels 104 verläuft und zu einem Oxidationsmittel-Einlass 138 eines Oxidationsmittel-Zuführkanals 136 des elektrochemisch aktiven Teils 168 des Brennstoffzellenstapels 104 führt.

Ebenso mündet der Brenngas-Zuführkanal 164 des seitlichen Teils 184 des Wärmeübertragers 108 an seinem dem Brenngas-Einlass des Wärmeübertragers 108 abgewandten Ende in einen Brenngaskanal, welcher vorzugsweise quer, insbesondere im Wesentlichen senkrecht, zu der Stapelrichtung 126 des Brennstoffzellenstapels 104 verläuft und zu einem Brenngas-Einlass eines Brenngas-Zuführkanals 140 des elektrochemisch aktiven Teils 168 des Brennstoffzellenstapels 104 führt.

Der Brenngas-Zuführkanal 140 und der Oxidationsmittel-Zuführkanal 136 des elektrochemisch aktiven Teils 168 des Brennstoffzellenstapels 104 erstrecken sich vorzugsweise längs der Stapelrichtung 126 des Brennstoffzellenstapels 104.

Von dem Oxidationsmittel-Zuführkanal 136 gelangt das Oxidationsmittel durch die Kathodenräume 134 der Brennstoffzelleneinheiten 128 in einen Oxidationsmittel-Abführkanal 144 des elektrochemisch aktiven Teils 168 des Brennstoffzellenstapels 104, welcher sich, vorzugsweise im Wesentlichen parallel zur Stapelrichtung 126, bis zu einem Oxidationsmittel-Auslass 146 des Brennstoffzellenstapels 104 erstreckt.

Von dem Brenngas-Zuführkanal 140 gelangt das Brenngas durch die Anodenräume 132 der Brennstoffzelleneinheiten 128 zu einem Brenngas-Abführkanal 178 des elektrochemisch aktiven Teils 168 des Brennstoffzellenstapels 104, welcher sich, vorzugsweise im Wesentlichen parallel zur Stapelrichtung 126, bis zu einem Brenngas-Auslass des Brennstoffzellenstapels 104 erstreckt.

In dem oberen Teil 188 des Wärmeübertragers 108, welcher den Oxidationsmittelkanal 186 und den hierzu parallel geführten Brenngaskanal umfasst, wird Wärme von dem Brenngas auf das Oxidationsmittel übertragen.

Außerdem bildet der obere Teil 188 des Wärmeübertragers 108 eine obere Randzone 182 des Brennstoffzellenstapels 104, welche Wärme an die oberste Brennstoffzelleneinheit 128 des elektrochemisch aktiven Teils 168 des Brennstoffzellenstapels 104 abgibt, so dass ein Temperaturabfall dieser randständigen Brennstoffzelleneinheit 128 gegenüber den zentralen Brennstoffzelleneinheiten 128 verringert oder ganz vermieden wird.

Der seitliche Teil 184 des Wärmeübertragers 108 gibt Wärme an die ihm zugewandten Endbereiche der Brennstoffzelleneinheiten 128 ab, so dass ein Temperaturabfall dieser Endbereiche der Brennstoffzelleneinheiten 128 gegenüber den zentralen Bereichen der Brennstoffzelleneinheiten 128 verringert oder ganz vermieden wird.

Somit bewirken die beiden Teile 184 und 188 des Wärmeübertragers 108 eine Vergleichmäßigung des Temperaturfelds im Brennstoffzellenstapel 104, wodurch Randeffekte vermieden werden und der Brennstoffzellenstapel 104 von thermomechanischer Belastung entlastet wird.

Auch bei allen in den Fig. 5 bis 9 dargestellten Varianten des Wärmeübertragers 108 kann vorgesehen sein, dass im vom Brenngas durchströmten Bereich des Wärmeübertragers 108 mindestens eine chemisch aktive Substanz zur Veränderung der Zusammensetzung des Brenngases angeordnet ist.

Im Übrigen stimmen alle drei dargestellten Varianten der in den Fig. 5 bis 9 dargestellten zweiten Ausführungsform der Brennstoffzellenvorrichtung 100 hinsichtlich Aufbau, Funktion und Herstellungsweise mit der in den Fig. 1 bis 4 dargestellten ersten Ausführungsform überein, auf deren vorstehende Beschreibung insoweit Bezug genommen wird.

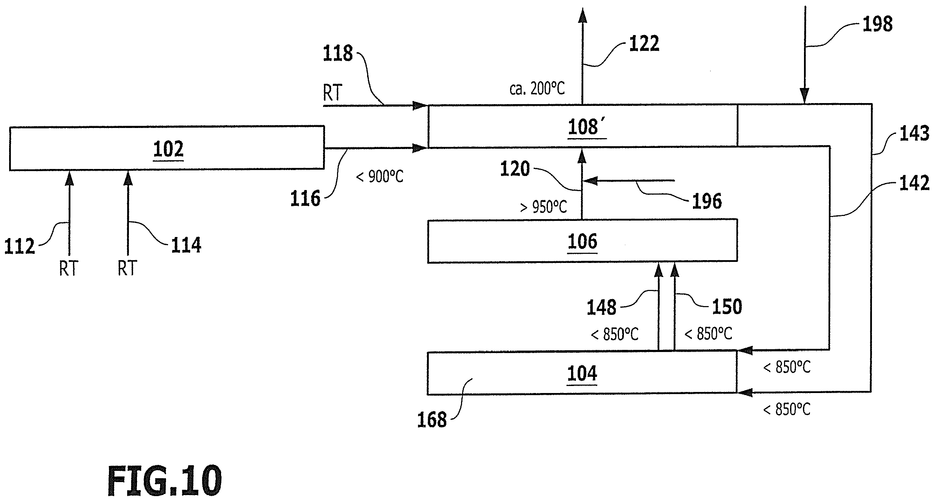

Eine in den Fig. 10 bis 12 dargestellte dritte Ausführungsform der Brennstoffzellenvorrichtung 100 unterscheidet sich von der in den Fig. 1 bis 4 dargestellten ersten Ausführungsform dadurch, dass der Wärmeübertrager 108 und der Abgas-Wärmeübertrager 110 nicht als zwei verschiedene, separat voneinander angeordnete Komponenten ausgebildet sind, sondern in einem von drei fluiden Medien durchströmten Wärmeübertrager 108' zusammengefasst sind.

Der Wärmeübertrager 108' ist beispielsweise als ein Kreuzstrom-Schichtwärmeübertrager mit horizontalen Mehrfachkanälen, welche das Oxidationsmittel bzw. das Brenngas führen, und einem oder mehreren vertikalen Abgaskanälen ausgebildet.

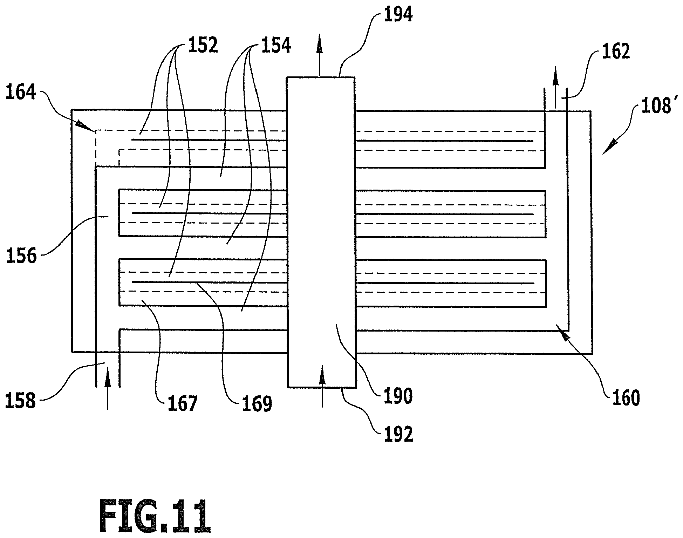

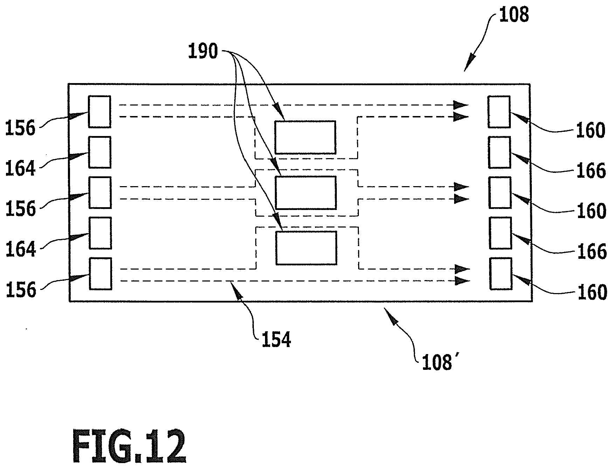

Bei der in den Fig. 11 und 12 im Einzelnen dargestellten Ausgestaltung des Wärmeübertrager 108' ist der Wärmeübertrager 108' hinsichtlich der das Oxidationsmittel führenden Kanäle und der das Brenngas führenden Kanäle grundsätzlich genauso aufgebaut wie der in den Fig. 2 und 3 dargestellte Wärmeübertrager.

Die Brenngasräume 152 und die Oxidationsmittelräume 154 des Wärmeübertragers 108' werden jedoch von einem oder mehreren, beispielsweise drei, vertikalen Abgaskanälen 190 durchsetzt, wobei die Innenräume der Abgaskanäle 190 gasdicht von den Brenngasräumen 152 und den Oxidationsmittelräumen 154 getrennt sind.

Jeder der Abgaskanäle 190 erstreckt sich von einem Abgas-Einlass 192 bis zu einem Abgas-Auslass 194 des Wärmeübertragers 108' und vorzugsweise im Wesentlichen parallel zu einer Stapelrichtung des Wärmeübertragers 108', längs welcher die Brenngasräume 152 und Oxidationsmittelräume 154 des Wärmeübertragers 108' aufeinanderfolgen.

In dem kombinierten Wärmeübertrager 108' kann somit sowohl Wärme von dem Brenngas auf das Oxidationsmittel als auch Wärme von dem Abgas des Brennstoffzellenstapels 104 auf das Oxidationsmittel übertragen werden.

Hierdurch wird eine Angleichung der Temperaturen des Brenngases und des Oxidationsmittels vor deren Eintritt in den Brennstoffzellenstapel 104 erzielt, wobei die Brennstoffzellenvorrichtung 100 nur einen Wärmeübertrager 108' enthalten muss.

Diese Ausführungsform stellt jedoch hohe Ansprüche an die Regelungstechnik, da die Temperaturregelung in der Aufheizphase und in der Betriebsphase des Brennstoffzellenstapels 104 mittels nur eines Wärmeübertragers 108' umgesetzt werden muss.

Es ist daher günstig, wenn bei dieser Ausführungsform ein Bypass 196 vorgesehen ist, mittels welchem Kühlluft in die Abgasleitung 120, vor dem Eintritt des Abgases in den Wärmeübertrager 108', einspeisbar ist.

Ferner ist es günstig, wenn bei dieser Ausführungsform ein Bypass 198 vorgesehen ist, mittels welchem Kühlluft in die Oxidationsmittelleitung 143, vor dem Eintritt des Oxidationsmittels in den elektrochemisch aktiven Teil 168 des Brennstoffzellenstapels 104, einspeisbar ist.

Im Übrigen stimmt die in den Fig. 10 bis 12 dargestellte dritte Ausführungsform der Brennstoffzellenvorrichtung 100 hinsichtlich Aufbau, Funktion und Herstellungsweise mit der in den Fig. 1 bis 4 dargestellten ersten Ausführungsform überein, auf deren vorstehende Beschreibung insoweit Bezug genommen wird.

Eine in Fig. 13 dargestellte vierte Ausführungsform der Brennstoffzellenvorrichtung 100 unterscheidet sich von der in den Fig. 10 bis 12 dargestellten dritten Ausführungsform dadurch, dass die Brennstoffzellenvorrichtung 100 zwei Wärmeübertrager 108 und 108' umfasst, die sowohl von dem Brenngas als auch von dem Oxidationsmittel stromaufwärts von dem elektrochemisch aktiven Teil 168 des Brennstoffzellenstapels 104 durchströmbar sind, wobei der erste Wärmeübertrager 108 dem Wärmeübertrager 108 der in den Fig. 1 bis 4 dargestellten ersten Ausführungsform entspricht, welcher von dem aus dem Reformer 102 stammenden Reformat und von dem aus der Oxidationsmittel-Zuführleitung 118 stammenden Oxidationsmittel durchströmbar ist, so dass in dem Wärmeübertrager 108 Wärme von dem reformierten Brenngas auf das, vorzugsweise zunächst bei Raumtemperatur befindliche, Oxidationsmittel übertragbar ist.

Das im ersten Wärmeübertrager 108 erwärmte Oxidationsmittel gelangt über eine Oxidationsmittel-Leitung 200 zu einem Oxidationsmittel-Einlass des zweiten Wärmeübertragers 108'.

Das im ersten Wärmeübertrager 108 abgekühlte Brenngas gelangt über eine Brenngas-Leitung 202 zu einem Brenngas-Einlass einer Entschwefelungsvorrichtung 204, in welcher der Gehalt des Brenngases an Schwefel und/oder an schwefelhaltigen Verbindungen, insbesondere durch Kondensation von schwefelhaltigen Verbindungen an einer in der Entschwefelungsvorrichtung 204 enthaltenen chemisch aktiven Substanz, verringerbar ist.

Eine solche zur Entschwefelung des Brenngases geeignete chemisch aktive Substanz kann beispielsweise Nickel, ein Cermet-Material und/oder ZnO umfassen.

Das zumindest teilweise entschwefelte Brenngas gelangt von einem Brenngas-Auslass der Entschwefelungsvorrichtung 204 über eine Brenngas-Leitung 206 zu einem Brenngas-Einlass des zweiten Wärmeübertragers 108'.

Das Brenngas und das Oxidationsmittel verlassen den ersten Wärmeübertrager 108 mit einander angeglichenen Temperaturen von beispielsweise nahezu 600 °C.

Mit etwa denselben Temperaturen treten das Brenngas und das Oxidationsmittel in den zweiten Wärmeübertrager 108' ein, in welchem Wärme von dem Abgas des Brennstoffzellenstapels 104 auf das Brenngas und das Oxidationsmittel übertragen wird, so dass das Brenngas und das Oxidationsmittel auf einander angeglichene Temperaturen von beispielsweise nahezu 850 °C erwärmt werden.

Mit dieser Temperatur verlassen das Brenngas und das Oxidationsmittel den zweiten Wärmeübertrager 108' und treten in den Brennstoffzellenstapel 104 ein.

Bei der in Fig. 13 dargestellten vierten Ausführungsform kann die Temperatur des Brenngases für die Entschwefelung mittels des ersten Wärmeübertragers 108 separat optimal geregelt werden, so dass ein optimaler Entschwefelungsgrad erzielt werden kann.

Im Übrigen stimmt die in Fig. 13 dargestellte vierte Ausführungsform der Brennstoffzellenvorrichtung 100 hinsichtlich Aufbau, Funktion und Herstellungsweise mit der in den Fig. 1 bis 4 dargestellten ersten Ausführungsform bzw. (in Bezug auf den zweiten Wärmeübertrager 108' und die Bypässe 196 sowie 198) mit der in den Fig. 10 bis 12 dargestellten dritten Ausführungsform überein, auf deren vorstehende Beschreibung insoweit Bezug genommen wird.

## Patentansprüche

1. Brennstoffzellenvorrichtung, umfassend
einen Brennstoffzellenstapel (104), der elektrochemisch aktive Kathoden-Elektrolyt-Anoden-Einheiten (130) umfasst, und
einen Reformer (102) zum Herstellen eines Brenngases für den Brennstoffzellenstapel (104) aus einem Ausgangsbrennstoff, wobei dem Brennstoffzellenstapel (104) das vom Reformer (102) hergestellte Brenngas und ein Oxidationsmittel zuführbar sind,
wobei die Brennstoffzellenvorrichtung (100) mindestens einen Wärmeübertrager (108) umfasst, der von dem Brenngas und von dem Oxidationsmittel stromaufwärts von den Kathoden-Elektrolyt-Anoden-Einheiten (130) des Brennstoffzellenstapels (104) durchströmbar ist,
wobei der Wärmeübertrager (108) in den Brennstoffzellenstapel (104) integriert ist,
wobei der Wärmeübertrager (108) zumindest teilweise in einer Randzone (172; 180, 182) des Brennstoffzellenstapels (104) angeordnet ist und wobei der Wärmeübertrager (108) stoffschlüssig mit einem elektrochemisch aktiven Teil (168) des Brennstoffzellenstapels (104) verbunden ist,
**dadurch gekennzeichnet,**
**dass** der Wärmeübertrager (108) durch Verschweißung mit dem elektrochemisch aktiven Teil (168) des Brennstoffzellenstapels (104) verbunden ist.

2. Brennstoffzellenvorrichtung nach Anspruch 1, **dadurch gekennzeichnet, dass** in dem Wärmeübertrager (108) Wärme von dem Brenngas auf das Oxidationsmittel übertragbar ist.

3. Brennstoffzellenvorrichtung nach einem der Ansprüche 1 oder 2, **dadurch gekennzeichnet, dass** der Wärmeübertrager (108) mindestens eine elektrochemisch inaktive Brennstoffzelleneinheit (128) des Brennstoffzellenstapels (104) umfasst.

4. Brennstoffzellenvorrichtung nach einem der Ansprüche 1 bis 3, **dadurch gekennzeichnet, dass** der Wärmeübertrager (108) zumindest teilweise seitlich neben mehreren elektrochemisch aktiven Brennstoffzelleneinheiten (128) des Brennstoffzellenstapels (104) angeordnet ist.

5. Brennstoffzellenvorrichtung nach Anspruch 4, **dadurch gekennzeichnet, dass** die Strömungsrichtung des Brenngases und/oder die Strömungsrichtung des Oxidationsmittels durch den Wärmeübertrager (108) zumindest abschnittsweise im Wesentlichen parallel zu einer Stapelrichtung (126) des Brennstoffzellenstapels (104) verläuft.

6. Brennstoffzellenvorrichtung nach einem der Ansprüche 1 bis 5, **dadurch gekennzeichnet, dass** der Wärmeübertrager (108) mindestens eine chemisch aktive Substanz umfasst.

7. Brennstoffzellenvorrichtung nach Anspruch 6, **dadurch gekennzeichnet, dass** die chemisch aktive Substanz eine zumindest teilweise Reduktion mindestens eines Bestandteils des Brenngases und/oder eine Verringerung des Sauerstoffgehaltes im Brenngas und/oder eine zumindest teilweise Entfernung von Schwefel oder einer Schwefelverbindung aus dem Brenngas bewirkt.

8. Brennstoffzellenvorrichtung nach einem der Ansprüche 6 oder 7, **dadurch gekennzeichnet, dass** die chemisch aktive Substanz eine Beschichtung an einer Wandung eines von dem Brenngas durchströmbaren Innenraums des Wärmeübertragers (108) und/oder einen in einem von dem Brenngas durchströmbaren Innenraum des Wärmeübertragers (108) angeordneten Substanzträger umfasst.

9. Brennstoffzellenvorrichtung nach einem der Ansprüche 6 bis 8, **dadurch gekennzeichnet, dass** die chemisch aktive Substanz durch den Wärmeübertrager (108) durchströmendes Oxidationsmittel kühlbar ist.

10. Brennstoffzellenvorrichtung nach einem der Ansprüche 6 bis 9, **dadurch gekennzeichnet, dass** die chemisch aktive Substanz Nickel, ein Edelmetall, eine Oxidkeramik und/oder ungefähr 20 Gewichtsprozent bis ungefähr 90 Gewichtsprozent Verbindungen von Nebengruppenmetallen und/oder von Elementen der dritten und vierten Hauptgruppe und ungefähr 10 Gewichtsprozent bis ungefähr 80 Gewichtsprozent Alkali- und/oder Erdalkaliverbindungen umfasst.

11. Verfahren zum Betreiben einer Brennstoffzellenvorrichtung (100), umfassend folgende Verfahrenschritte:
- Herstellen eines Brenngases aus einem Ausgangsbrennstoff mittels eines Reformers (102);
- Zuführen des Brenngases zu einem Brennstoffzellenstapel (104), der elektrochemisch aktive Kathoden-Elektrolyt-Anoden-Einheiten (130) umfasst; und
- Zuführen eines Oxidationsmittels zu dem Brennstoffzellenstapel (104);
wobei das Brenngas und das Oxidationsmittel durch mindestens einen Wärmeübertrager (108) geleitet werden, der stromaufwärts von den Kathoden-Elektrolyt-Anoden-Einheiten (130) des Brennstoffzellenstapels (104) angeordnet und in den Brennstoffzellenstapel (104) integriert ist, wobei der Wärmeübertrager (108) von dem Brenngas und von dem Oxidationsmittel stromaufwärts von den Kathoden-Elektrolyt-Anoden-Einheiten (130) des Brennstoffzellenstapels (104) durchströmt wird und wobei der Wärmeübertrager (108) zumindest teilweise in einer Randzone (172; 180, 182) des Brennstoffzellenstapels (104) angeordnet ist und wobei der Wärmeübertrager (108) stoffschlüssig mit einem elektrochemisch aktiven Teil (168) des Brennstoffzellenstapels (104) verbunden ist,
**dadurch gekennzeichnet,**
**dass** der Wärmeübertrager (108) durch Verschweißung mit dem elektrochemisch aktiven Teil (168) des Brennstoffzellenstapels (104) verbunden ist.

## Claims

1. A fuel cell device, including
a fuel cell stack (104) that includes electrochemically active cathode/electrolyte/ anode units (130), and
a reformer (102) for producing a fuel gas for the fuel cell stack (104) from a starting fuel, wherein the fuel cell stack (104) is configured to have the fuel gas produced by the reformer (102) and an oxidising agent supplied to it, wherein the fuel cell device (100) includes at least one heat transfer device (108) which is configured to have the fuel gas and the oxidising agent flow through it, upstream of the cathode/electrolyte/anode units (130) of the fuel cell stack (104),
wherein the heat transfer device (108) is integrated in the fuel cell stack (104),
wherein the heat transfer device (108) is arranged at least in part in an edge zone (172; 180, 182) of the fuel cell stack (104) and
wherein the heat transfer device (108) is connected by a substance-to-substance bond to an electrochemically active part (168) of the fuel fell stack (104),
**characterised in that**
the heat transfer device (108) is connected by welding to the electrochemically active part (168) of the fuel cell stack (104).

2. A fuel cell device according to Claim 1, **characterised in that**, in the heat transfer device (108), heat is transferable from the fuel gas to the oxidising agent.

3. A fuel cell device according to one of Claims 1 or 2, **characterised in that** the heat transfer device (108) includes at least one electrochemically inactive fuel cell unit (128) of the fuel cell stack (104).

4. A fuel cell device according to one of Claims 1 to 3, **characterised in that** the heat transfer device (108) is arranged at least in part laterally next to a plurality of electrochemically active fuel cell units (128) of the fuel cell stack (104).

5. A fuel cell device according to Claim 4, **characterised in that** the direction of flow of the fuel gas and/or the direction of flow of the oxidising agent runs through the heat transfer device (108), at least in certain sections, substantially parallel to a stack direction (126) of the fuel cell stack (104).

6. A fuel cell device according to one of Claims 1 to 5, **characterised in that** the heat transfer device (108) includes at least one chemically active substance.

7. A fuel cell device according to Claim 6, **characterised in that** the chemically active substance brings about an at least partial reduction of at least one component of the fuel gas and/or a lessening in the oxygen content of the fuel gas and/or an at least partial removal of sulfur or a sulfur compound from the fuel gas.

8. A fuel cell device according to one of Claims 6 or 7, **characterised in that** the chemically active substance includes a coating on a wall of an inner space of the heat transfer device (108) which is configured to have the fuel gas flow through it, and/or a substance support that is arranged in an inner space of the heat transfer device (108) which is configured to have the fuel gas flow through it.

9. A fuel cell device according to one of Claims 6 to 8, **characterised in that** the chemically active substance is coolable by oxidising agent flowing through the heat transfer device (108).

10. A fuel cell device according to one of Claims 6 to 9, **characterised in that** the chemically active substance contains nickel, a noble metal, an oxide ceramic and/or approximately 20 weight % to approximately 90 weight % of compounds of transition metals and/or elements in groups III and IV and approximately 10 weight % to approximately 80 weight % of alkali or alkaline earth metal compounds.

11. A method for operating a fuel cell device (100), including the following method steps:
- producing a fuel gas from a starting fuel by means of a reformer (102);
- supplying the fuel gas to a fuel cell stack (104) which includes electrochemically active cathode/electrolyte/anode units (130); and
- supplying an oxidising agent to the fuel cell stack (104);
wherein the fuel gas and the oxidising agent are fed through at least one heat transfer device (108) that is arranged upstream of the cathode/electrolyte/anode units (130) of the fuel cell stack (104) and is integrated in the fuel cell stack (104),
wherein the fuel gas and the oxidising agent flow through the heat transfer device (108) upstream of the cathode/electrolyte/anode units (130) of the fuel cell stack (104) and
wherein the heat transfer device (108) is arranged at least in part in an edge zone (172; 180, 182) of the fuel cell stack (104) and
wherein the heat transfer device (108) is connected by a substance-to-substance bond to an electrochemically active part (168) of the fuel fell stack (104),
**characterised in that**
the heat transfer device (108) is connected by welding to the electrochemically active part (168) of the fuel cell stack (104).

## Revendications

1. Dispositif de piles à combustible, comprenant
un empilement de piles à combustible (104) qui comprend des unités cathodes - électrolyte - anodes électrochimiquement actives (130), et
un reformeur (102) pour la génération d'un gaz combustible pour l'empilement de piles à combustibles (104) à partir d'un combustible de départ, dans lequel le gaz combustible généré par le reformeur (102) et un agent oxydant peuvent être amenés à l'empilement de piles à combustible (104),
le dispositif de piles à combustibles (100) comprenant au moins un échangeur de chaleur (108), qui peut être traversé par le gaz combustible et l'agent oxydant en amont des unités cathodes - électrolyte - anodes (130) de l'empilement de piles à combustible (104),
l'échangeur de chaleur (108) étant intégré dans l'empilement de piles à combustibles (104),
l'échangeur de chaleur (108) étant disposé au moins partiellement dans une zone de bord (172 ; 180, 182) de l'empilement de piles à combustible (104) et l'échangeur de chaleur (108) étant lié à une partie électrochimiquement active (168) de l'empilement de piles à combustible (104) par liaison de matière,
**caractérisé en ce que**
l'échangeur de chaleur (108) est lié par soudage à la partie électrochimiquement active (168) de l'empilement de piles à combustible (104).

2. Dispositif de piles à combustible selon la revendication 1, **caractérisé en ce que**, dans l'échangeur de chaleur (108), de la chaleur peut être transférée du gaz combustible à l'agent oxydant.

3. Dispositif de piles à combustible selon l'une des revendications 1 ou 2, **caractérisé en ce que** l'échangeur de chaleur (108) comprend au moins une unité de piles à combustible électrochimiquement inactive (128) de l'empilement de piles à combustible (104).

4. Dispositif de piles à combustible selon l'une des revendications 1 à 3, **caractérisé en ce que** l'échangeur de chaleur (108) est disposé au moins partiellement latéralement à côté de plusieurs unités de piles à combustible électrochimiquement actives (128) de l'empilement de piles à combustible (104).

5. Dispositif de piles à combustible selon la revendication 4, **caractérisé en ce que** le sens de circulation du gaz combustible et/ou le sens de circulation de l'agent oxydant à travers l'échangeur de chaleur (108) est au moins par endroit sensiblement parallèle à un sens d'empilement (126) de l'empilement de piles à combustible (104).

6. Dispositif de piles à combustible selon l'une des revendications 1 à 5, **caractérisé en ce que** l'échangeur de chaleur (108) comprend au moins une substance chimiquement active.

7. Dispositif de piles à combustible selon la revendication 6, **caractérisé en ce que** la substance chimiquement active provoque une réduction au moins partielle d'au moins un composant du gaz combustible et/ou une diminution de la teneur en oxygène dans le gaz combustible et/ou une élimination au moins partielle du soufre ou d'un composé soufré hors du gaz combustible.

8. Dispositif de piles à combustible selon l'une des revendications 6 ou 7, **caractérisé en ce que** la substance chimiquement active comprend un revêtement sur une paroi d'une chambre interne de l'échangeur de chaleur (108) pouvant être traversée par le gaz combustible et/ou un porteur de substance disposé dans une chambre interne de l'échangeur de chaleur (108) pouvant être traversée par le gaz combustible.

9. Dispositif de piles à combustible selon l'une des revendications 6 à 8, **caractérisé en ce que** la substance chimiquement active peut être refroidie par un agent oxydant traversant l'échangeur de chaleur (108).

10. Dispositif de piles à combustible selon l'une des revendications 6 à 9, **caractérisé en ce que** la substance chimiquement active comprend du nickel, un métal précieux, une céramique d'oxyde et/ou environ 20 % en poids jusqu'à environ 90 % en poids de composés des métaux des groupes secondaires et/ou d'éléments du troisième et quatrième groupe principal et environ 10 % en poids jusqu'à environ 80 % en poids de composés alcalins et/ou alcalino-terreux.

11. Procédé permettant de faire fonctionner un dispositif de piles à combustible (100), comprenant les étapes de procédé suivantes :
- génération d'un gaz combustible à partir d'un combustible de départ au moyen d'un reformeur (102) ;
- alimentation du gaz combustible à un empilement de piles à combustible (104), qui comprend des unités cathodes - électrolyte - anodes électrochimiquement actives (130) ; et
- alimentation d'un agent oxydant à l'empilement de piles à combustible (104) ;
dans lequel le gaz combustible et l'agent oxydant sont conduits à travers au moins un échangeur de chaleur (108) qui est disposé en amont des unités cathodes - électrolyte - anodes électrochimiquement actives (130) de l'empilement de piles à combustible (104) et intégré dans l'empilement de piles à combustible (104), dans lequel l'échangeur de chaleur (108) est traversé par le gaz combustible et par l'agent oxydant en amont des unités cathodes - électrolyte - anodes (130) de l'empilement de piles à combustible (104) et dans lequel l'échangeur de chaleur (108) est au moins partiellement disposé dans une zone de bord (172 ; 180, 182) de l'empilement de piles à combustible (104) et l'échangeur de chaleur (108) est lié par liaison de matière à une partie électrochimiquement active (168) de l'empilement de piles à combustible (104),
**caractérisé en ce que**,
l'échangeur de chaleur (108) est relié par soudage à la partie électrochimiquement active (168) de l'empilement de piles à combustible (104).
